# FASCICULE DE BREVET EUROPEEN

(11) **EP 3 994 430 B1**
(45) Date de publication et mention de la délivrance du brevet: **01.04.2026**
(21) Numéro de dépôt: 20756921.1
(22) Date de dépôt: 27.07.2020
(51) Int. Cl.: G01H 9/00

(54) **DISPOSITIF DE MESURE COMPRENANT UNE FIBRE OPTIQUE DE CONNEXION ET UN ÉQUIPEMENT DE MESURE POUR L'INSTRUMENTATION D'UN APPAREILLAGE AÉRONAUTIQUE, ET UN APPAREILLAGE AÉRONAUTIQUE COMPRENANT UN TEL DISPOSITIF DE MESURE**
MESSVORRICHTUNG MIT EINER OPTISCHEN VERBINDUNGSFASER UND EINEM MESSGERÄT ZUR INSTRUMENTIERUNG EINES AERONAUTISCHEN SYSTEMS SOWIE EIN SOLCHES MESSGERÄT ENTHALTENDES AERONAUTISCHES SYSTEM
MEASURING DEVICE COMPRISING A CONNECTING OPTICAL FIBRE AND AN ITEM OF MEASURING EQUIPMENT FOR INSTRUMENTATION OF AN AERONAUTICAL SYSTEM, AND AN AERONAUTICAL SYSTEM COMPRISING SUCH A MEASURING DEVICE

(30) Priorité: 29.07.2019 FR 1908621
(43) Date de publication de la demande: 11.05.2022
(73) Titulaire: SAFRAN, 75015 Paris (FR)
(72) Inventeur: SALHI, Nassim, 77550 MOISSY-CRAMAYEL (FR); PHAN HUY, Minh Chau, 77550 MOISSY-CRAMAYEL (FR); STASINOPOULOS, Ioannis, 77550 MOISSY-CRAMAYEL (FR)
(74) Mandataire: Santarelli
(86) Numéro de dépôt international: PCT/FR2020/051370
(87) Numéro de publication internationale: WO 2021/019173

(56) Documents cités:
- DE-A1- 102016 202 662
- US-A1- 2013 301 037
- US-A1- 2018 259 551

## Description

### Domaine technique

L'invention concerne le domaine des équipements de mesure et de leur connexion optique à des systèmes de mesure optique.

L'invention a ainsi plus particulièrement pour objet un dispositif de mesure, un ensemble de mesure et un appareillage aéronautique comprenant un tel dispositif de mesure.

### État de l'art antérieur

Afin d'obtenir la mesure d'un paramètre d'un appareil ou d'un véhicule, tel que par exemple, les vibrations acoustiques auxquelles est soumis ledit appareil ou véhicule, il est parfois nécessaire d'y installer des équipements de mesure, ou capteurs,, tels que des équipements de mesure de vibrations acoustiques, et des systèmes de mesure correspondant permettant d'interroger lesdits équipements de mesure pour déterminer ledit paramètre. Cette communication, lorsqu'elle est optique, est généralement réalisée au moyen d'une fibre optique.

On peut ainsi citer l'exemple fourni par le document FR 3 026 838 concernant la mesure de vibrations acoustiques au moyen d'un transducteur opto-mécanique et qui peut être interrogé par un système de mesure optique ceci au moyen d'une connexion fournie par une fibre optique.

On connait également les documents US208259551A1, DE102016202662A1 et US2013301037A1 qui sont tous les arts antérieurs de l'invention présentée ci-après.

Or si de tels équipements permettent de mesurer un ou plusieurs paramètres dudit appareil ou véhicule, les mesures qu'ils fournissent ne sont pas toujours complètes et peuvent être dépendantes d'autres paramètres, tels que la température de l'équipement auxquels l'équipement ne donne pas accès.

Ainsi, il pourrait être intéressant de pouvoir compléter la ou les mesures offertes par de tel équipement ceci sans nécessiter d'ajout d'un nouvel équipement qui, en plus d'alourdir l'appareil ou le véhicule, devrait alors être à intégrer dans ledit appareil ou véhicule.

### Exposé de l'invention

L'invention vise à résoudre le problème ci-dessus et a ainsi pour objet de fournir une solution permettant de compléter les mesures offertes par un équipement de mesure connecté optiquement à un système de mesure sans nécessiter un équipement de mesure supplémentaire et sans perturbation de la communication entre ledit équipement et le système optique.

L'invention concerne à cet effet un dispositif de mesure comprenant :
- un équipement de mesure configuré pour être interrogé optiquement par un système de mesure au moyen de premiers signaux optiques dans une première plage de longueurs d'onde,
- une fibre optique de connexion comprenant une première extrémité connectée à l'équipement de mesure et une deuxième extrémité destinée à être connectée au système de mesure, la fibre optique de connexion comprenant au moins un premier cœur optique multimode dans la première plage de longueurs d'onde pour transmettre les premiers signaux optiques.

La fibre optique de connexion comprend en outre un deuxième cœur optique monomode dans une deuxième plage de longueurs d'onde pour transmettre des deuxièmes signaux optiques dans la deuxième plage de longueurs d'onde,
la fibre optique de connexion comprenant au moins une première portion de fibre optique fonctionnalisée adaptée pour présenter à la deuxième plage de longueurs d'onde une caractéristique optique variant avec un paramètre environnemental de la fibre optique de connexion,
et le dispositif de mesure comprenant en outre un système de couplage associé à la deuxième extrémité de la fibre optique de connexion, le système de couplage comprenant au moins une première et une deuxième sortie optique et étant adapté pour coupler optiquement le premier cœur optique avec la première sortie et pour coupler optiquement le deuxième cœur optique avec la deuxième sortie.

Ainsi, il est possible, sans avoir à rajouter un équipement de mesure supplémentaire, d'obtenir par une mesure de la caractéristique optique au moyen d'un deuxième signal optique dans la deuxième plage de longueurs d'onde une mesure d'un paramètre environnemental de la fibre optique et donc du équipement de mesure. De plus cette mesure se fait avec une perturbation réduite puisque les premiers et les deuxièmes signaux optiques sont confinés dans respectivement le premier et le deuxième cœur optique. On notera de plus, qu'avec une telle configuration, il est possible de combiner deux types de mesure, l'un, concernant les mesures offerte par l'équipement de mesure, basé sur une interrogation au moyen d'une fibre optique multimode, et l'autre, concernant les mesures obtenues au moyen de la portion de fibre optique fonctionnalisée, basé sur une interrogation au moyen d'une fibre optique monomode.

Par « portion fonctionnalisée » il doit être entendu ci-dessus et dans le reste de ce document que la première portion de fibre optique présente une modification structurelle vis-à-vis du reste de la fibre optique non fonctionnalisé fournissant une sensibilité à un paramètre environnemental. Une telle modification structurelle de la fibre optique peut être liée, par exemple à la composition de cette portion ou de l'un des éléments de cette portion, tel que le deuxième cœur optique, l'addition d'un revêtement, l'inscription d'une structure, tel qu'un réseau de Bragg, ou encore une combinaison de deux ou plus de ces possibilités.

Selon une possibilité avantageuse de l'invention, la première fibre optique peut comprendre en outre une deuxième portion de fibre fonctionnalisée, ladite deuxième portion de fibre fonctionnalisée étant adaptée pour présenter à la deuxième plage de longueurs d'onde une caractéristique optique variant avec un paramètre environnemental de la fibre optique de connexion identique ou différent de celui de la première portion de fibre optique fonctionnalisée.

Selon cette possibilité, la deuxième plage de longueurs d'onde peut comporter une première et deuxième sous-plage de longueurs d'onde jointes ou disjointes, la portion de fibre fonctionnalisée étant adaptée pour présenter à la première sous-plage de longueurs d'onde la caractéristique optique variant avec ledit paramètre environnemental de la fibre optique de connexion, la deuxième portion de fibre fonctionnalisée étant adaptée pour présenter à la deuxième sous-plage de longueurs d'onde la caractéristique optique variant avec le paramètre environnemental de la fibre optique de connexion identique ou différent de celui de la première portion de fibre optique fonctionnalisée.

Selon une possibilité de l'invention, la fonctionnalisation de la première portion de fibre fonctionnalisée peut être adaptée pour limiter les fuites des deuxièmes signaux optiques vers le premier corps optique.

De cette manière, le confinement du deuxième cœur optique étant conservé sur la totalité de la longueur de la fibre optique de connexion, la séparation entre les premiers et les deuxièmes signaux est quasi-totale et il n'est donc pas nécessaire de filtrer l'éventuelle partie des deuxièmes signaux qui pourrait avoir diffusé dans le premier cœur optique lors de l'interaction entre les deuxièmes signaux optiques et la première portion de fibre fonctionnalisée.

Le système de couplage peut en outre être configuré pour, au niveau de la première sortie, filtrer au moins en partie les deuxième signaux optiques guidés dans le premier cœur optique.

Un tel système de couplage permet de limiter, voire supprimer, la partie des deuxièmes signaux optiques qui pourrait avoir éventuellement diffusée avec les premiers signaux optiques et ainsi limiter les risques de perturbation lors de l'analyse des deuxièmes signaux optiques par le système de mesure optique.

Le système de couplage peut en outre être configuré pour, au niveau de la deuxième sortie, filtrer au moins en partie les premiers signaux optiques guidés dans le deuxième cœur optique.

La deuxième extrémité de la fibre optique de connexion peut comprendre le système de couplage,
le système de couplage comprenant un premier segment de fibre optique couplés optiquement au premier cœur optique et découplé optique du deuxième cœur optique, et un deuxième segment de fibre optique couplé optiquement au deuxième cœur optique et découplé optique du premier cœur optique,
le premier segment de fibre optique comprenant la première sortie optique,
le deuxième segment de fibre optique comprenant la deuxième sortie optique, le système de couplage étant préférentiellement un coupleur à double gaine.

Un tel système de couplage permet de fournir un système de couplage particulièrement compact puisqu'il est inclus dans la fibre optique.

On notera, de plus, que dans une configuration de coupleur à double gaine, telle que celle décrite dans le document US 8792757, il est possible d'obtenir un couplage optique du premier cœur optique avec uniquement la première sortie optique et un couplage optique du deuxième cœur optique avec la deuxième sortie optique. Ainsi, on obtient une séparation efficace entre les premiers et les deuxièmes signaux optiques. Le système de couplage peut être externe à la deuxième fibre optique, tel qu'un séparateur apte à séparer les premiers signaux optiques et les deuxièmes signaux optiques pour les diriger respectivement vers la première et la deuxième sortie optique.

Ainsi, il est possible de mieux contrôler la séparation entre les premiers et les deuxièmes signaux optiques tout en assurant une connexion entre la fibre optique de connexion et le système de mesure au moyen de connecteurs adaptés, puisqu'obtenu par l'intermédiaire du système de couplage.

La première portion de fibre optique fonctionnalisée peut comprendre un réseau de Bragg inscrit dans le second cœur optique.

Une telle fonctionnalisation de la fibre optique de connexion permet de remonter à des paramètres environnementaux de la fibre optique de connexion, tels que la température et les contraintes qui s'exercent sur cette dernière.

L'équipement de mesure peut être un système de détection de vibration, tel qu'un système de détection de vibration à membrane.

Un tel système de détection de vibration permet de mesurer les vibrations auxquelles est soumis l'appareillage sur lequel le dispositif de mesure est installé ceci à partir de simple signaux optique.

L'invention concerne en outre un ensemble de mesure comprenant :
- un dispositif de mesure selon l'invention,
- un système de mesure optique configuré pour interroger l'équipement de mesure au moyen de premiers signaux optiques dans la première plage de longueurs d'onde et pour mesurer la caractéristique optique de la première portion de fibre optique fonctionnalisée au moyen de deuxièmes signaux optiques dans la deuxième plage de longueurs d'onde, le système de mesure optique étant relié à la première et à la deuxième sortie optique du système de couplage.

Un tel ensemble de mesure présente les avantages inhérents au dispositif de mesure selon l'invention.

Le système de mesure optique peut comprendre :
- une première source optique adaptée pour émettre des signaux optiques dans la première plage de longueurs d'onde,
- un premier analyseur de signaux optiques adapté pour analyser les premiers signaux optiques issus de l'interrogation de l'équipement de mesure,
- une deuxième source optique adaptée pour émettre des signaux optiques dans la deuxième plage de longueurs d'onde,
- un deuxième analyseur de signaux optiques adapté pour analyser les deuxièmes signaux optiques afin de déterminer la caractéristique optique de la première portion de fibre optique fonctionnalisée,
- un premier élément de connexion adapté pour connecter la première source optique et le premier analyseur de signaux optiques à la première sortie du système de couplage,
- un deuxième élément de connexion adapté pour connecter la deuxième source optique et le deuxième analyseur de signaux optiques à la deuxième sortie du système de couplage.

Avec une telle configuration, il est possible d'optimiser séparément les signaux optiques utilisés pour interroger l'équipement de mesure et ceux utilisés pour interroger la fonctionnalisation de la portion de fibre optique fonctionnalisée.

Le système de mesure optique peut comprendre :
- une première source optique adaptée pour émettre des signaux optiques dans la première plage de longueurs d'onde,
- une deuxième source optique adaptée pour émettre des signaux optiques dans la deuxième plage de longueurs d'onde,
- un analyseur de signaux optiques adapté pour analyser les premiers signaux optiques issus de l'interrogation de l'équipement de mesure et pour analyser les deuxièmes signaux optiques après interaction avec la première portion de fibre optique fonctionnalisée afin de déterminer la caractéristique optique de la première portion de fibre optique fonctionnalisée et le paramètre environnemental de la fibre optique de connexion correspondant,
- un premier élément de connexion adapté pour connecter la première source optique et l'analyseur de signaux optiques à la première sortie du système de couplage,
- un deuxième élément de connexion adapté pour connecter la deuxième source optique et l'analyseur de signaux optiques à la deuxième sortie du système de couplage.

De cette manière, il est possible de fournir un système de mesure simplifié et allégé, puisque ne nécessitant qu'un unique analyseur de signaux optiques tout en pouvant optimisés séparément les premiers et deuxièmes signaux optiques, puisque leur émission est obtenu au moyen de sources optiques distinctes.

Le système de mesure optique peut comprendre :
- une source optique adaptée pour émettre des signaux optiques dans la première plage de longueurs d'onde et dans la deuxième plage de longueurs d'onde,
- un premier analyseur de signaux optiques adapté pour analyser les premiers signaux optiques issus de l'interrogation de l'équipement de mesure,
- une deuxième analyseur de signaux optiques adapté pour analyser les deuxièmes signaux optiques après interaction avec la première portion de fibre optique fonctionnalisée afin de déterminer la caractéristique optique de la première portion de fibre optique fonctionnalisée et le paramètre environnemental de la fibre optique de connexion correspondant,
- un premier élément de connexion adapté pour connecter la source optique et le premier analyseur de signaux optiques à la première sortie du système de couplage,
- un deuxième élément de connexion adapté pour connecter la source optique et le deuxième analyseur de signaux optiques à la deuxième sortie du système de couplage.

Avec une telle configuration, il est possible de fournir un système de mesure simplifié et allégé, puisqu'une seule source de lumière est utilisée pour générer les premiers et les deuxièmes signaux optiques.

Le système de mesure optique comprend :
- une source optique adaptée pour émettre des signaux optiques dans la première plage de longueurs d'onde et dans la deuxième plage de longueurs d'onde,
- un analyseur de signaux optiques adapté pour analyser les premiers signaux optiques issus de l'interrogation de l'équipement de mesure et pour analyser les deuxièmes signaux optiques après interaction avec la première portion de fibre optique fonctionnalisée afin de déterminer la caractéristique optique de la première portion de fibre optique fonctionnalisée et le paramètre environnemental de la fibre optique de connexion correspondant,
- un premier élément de connexion adaptée pour connecter la source optique et le premier analyseur de signaux optiques à la première sortie du système de couplage,
- un deuxième élément de connexion adaptée pour connecter la source optique et le deuxième analyseur de signaux optiques à la deuxième sortie du système de couplage.

Avec une telle configuration, il est possible de fournir un système de mesure particulièrement simplifié et allégé, puisqu'une seule source de lumière et un seul analyseur de signaux optiques sont utilisés pour mettre les mesures selon l'invention.

Dispositif de mesure est un dispositif selon l'invention dans lequel la première portion de fibre optique fonctionnalisée comprend un réseau de Bragg inscrit dans le second cœur optique, le système de mesure optique pouvant être configuré pour mesurer une variation de la fréquence de résonnance du réseau de Bragg à partir de signaux optiques dans la deuxième plage de longueurs d'onde.

L'invention concerne en outre un procédé de mesure à partir d'un dispositif de mesure selon l'invention, comprenant les étapes suivantes :
- émission de premiers signaux optiques dans la première plage de longueurs d'onde, lesdits premiers signaux optiques étant transmis à la première sortie optique du système de couplage et le premier cœur optique afin d'interroger l'équipement de mesure,
- analyse des premiers signaux optiques récupérés à partir de la première sortie optique du système de couplage après interaction avec l'équipement de mesure,
- émission de deuxièmes signaux optiques dans la deuxième plage de longueurs d'onde, les deuxièmes signaux optiques étant transmis à la deuxième sortie optique du système de couplage et le deuxième cœur optique afin d'interagir avec la première portion de fibre optique fonctionnalisée,
- analyse des deuxièmes signaux optiques récupérés à partir de la deuxième sortie optique du système de couplage après interaction avec la première portion de fibre optique fonctionnalisée ceci afin déterminer la caractéristique optique de la première portion de fibre optique fonctionnalisée et le paramètre environnemental de la fibre optique de connexion correspondant.

Un tel procédé permet de bénéficier des avantages inhérents à l'utilisation d'un dispositif de mesure selon l'invention.

L'invention concerne en outre un appareil comprenant un ensemble de mesure selon l'invention.

Un tel appareillage de turbomachine bénéficie des avantages liés à un ensemble de mesure selon l'invention.

L'appareil peut être une turbomachine.

Une turbomachine bénéficie particulièrement des possibilités de l'invention puisque l'ensemble de mesure selon l'invention donne accès, ceci sans ajout de capteur distinct à l'ensemble, à un autre paramètre de la turbomachine. Ainsi, il est possible d'améliorer la surveillance de la turbomachine sans augmentation significative de la turbomachine.

### Brève description des dessins

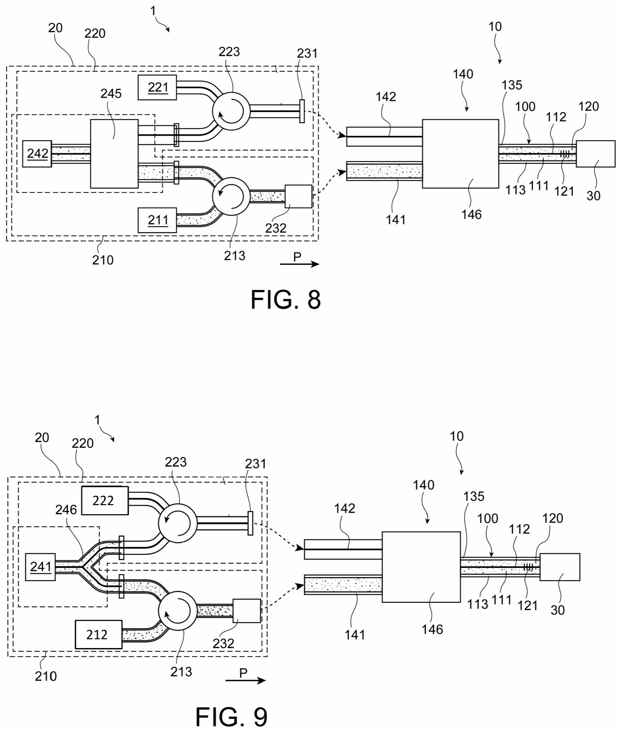

La présente invention sera mieux comprise à la lecture de la description d'exemples de réalisation, donnés à titre purement indicatif et nullement limitatif, en faisant référence aux dessins annexés sur lesquels :

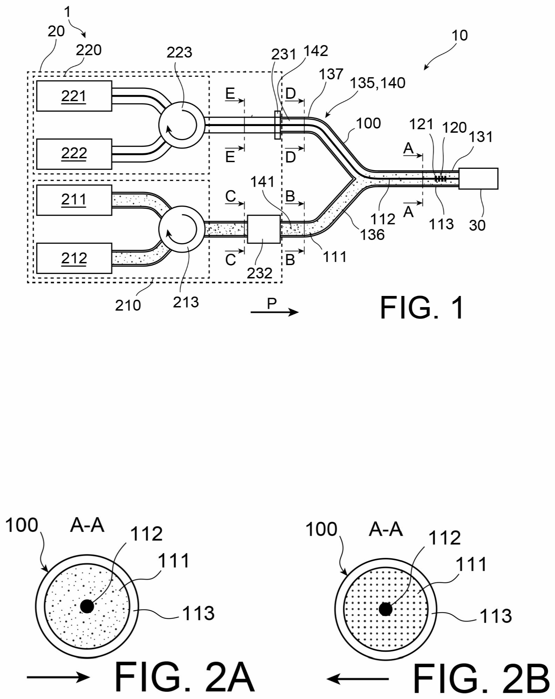

- la figure 1 illustre un ensemble de mesure selon un premier mode de réalisation de l'invention, ledit ensemble de mesure comprenant un dispositif de mesure selon l'invention,

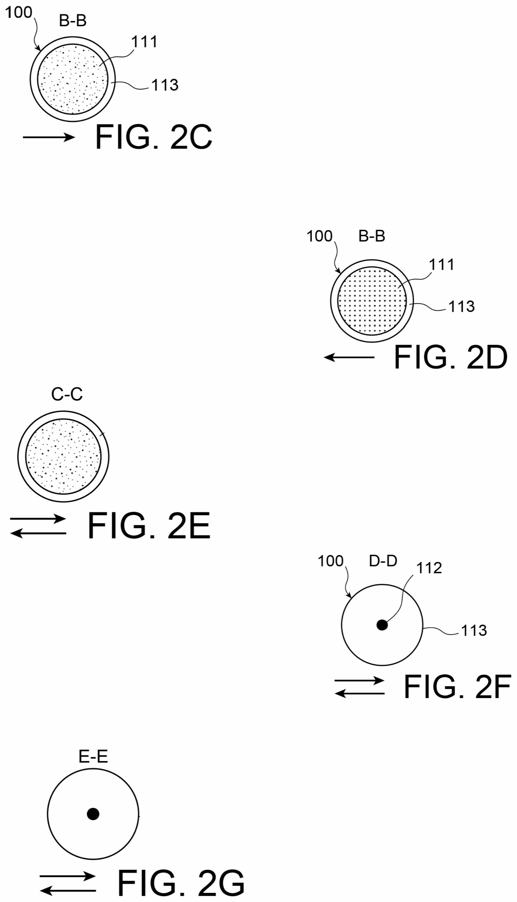

- les figures 2A à 2G illustrent la répartition des signaux optiques le long d'une fibre optique de connexion et de fibres optiques internes d'un système de mesure d'un ensemble de mesure tel qu'illustré sur la figure 1 ceci au niveau de plans de coupes figurés sur la figure 1, les figures 2A à 2G illustrant ainsi les signaux optiques respectifs selon un plan de coupe A-A et une direction de propagation avale, selon le plan de coupe A-A et une direction de propagation amont, selon un plan de coupe B-B et la direction avale, selon le plan de coupe B-B et la direction amont, selon un plan de coupe C-C et les deux directions amont et aval, selon un plan de coupe D-D et les deux directions amont et aval et selon un plan de coupe E-E et les deux directions amont et aval,

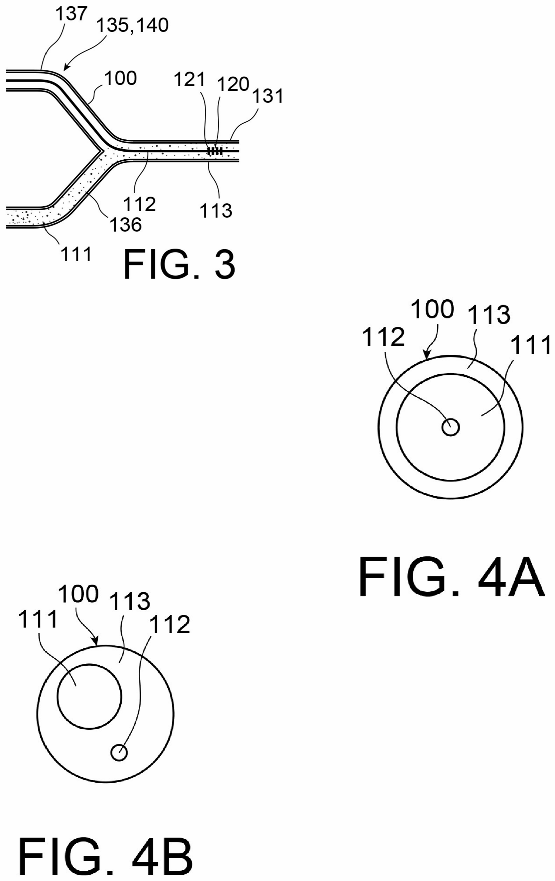

- la figure 3 illustre une fibre optique de connexion d'un ensemble de mesure selon le premier mode de réalisation de l'invention,

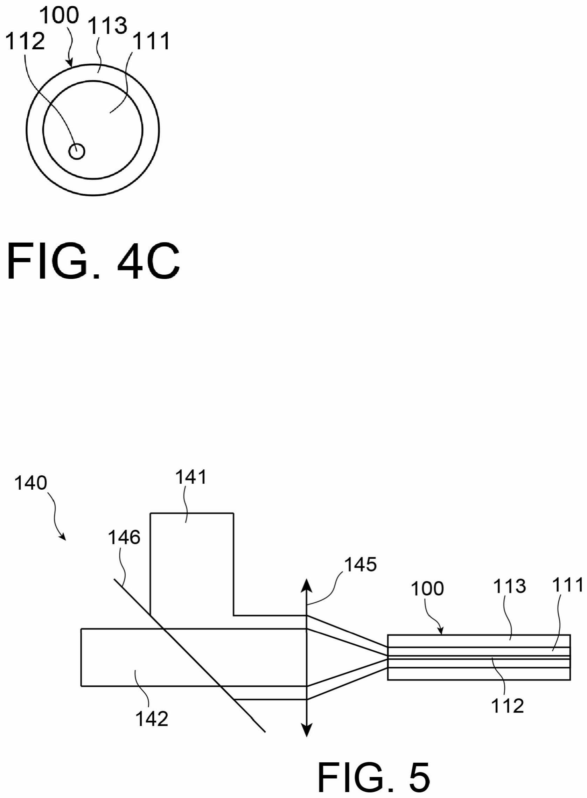

- les figures 4A à 4C illustrent respectivement des exemples d'agencement d'un premier et d'un deuxième cœur optique de la fibre optique ceci selon un plan de coupe F-F tel que montré sur la figure 3,
- la figure 5 illustre un système de couplage optique selon une première possibilité d'une variante du premier mode de réalisation de l'invention dans lequel un système de couplage optique de l'ensemble de mesure est externe à la fibre optique de connexion et pour lequel la séparation entre des premiers et des deuxièmes signaux optiques est obtenue au moyen d'un miroir dichroïque,

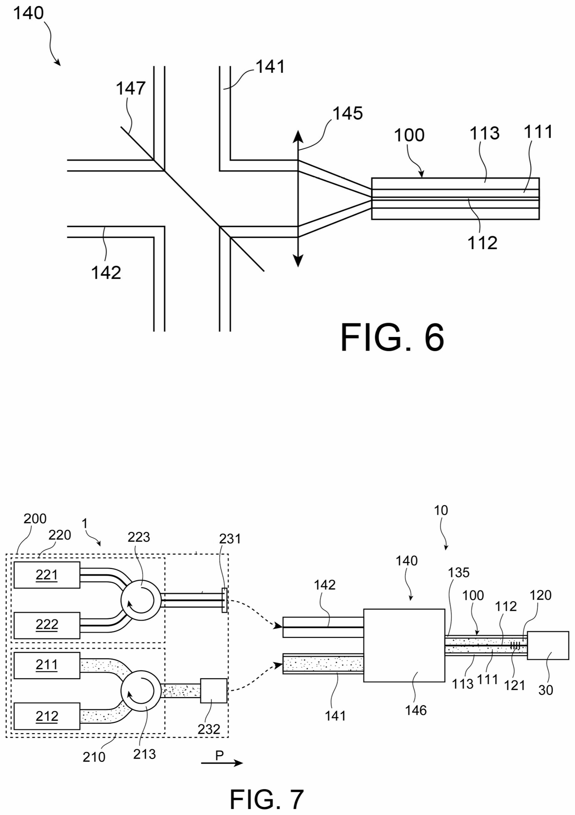

- la figure 6 illustre un système de couplage optique selon une deuxième possibilité de la variante du premier mode de réalisation de l'invention dans lequel le système de couplage optique est externe à la fibre optique et pour lequel le système de couplage est adapté pour diviser chacun des premiers et des deuxièmes signaux en un premier et un deuxième sous-faisceau dirigés respectivement vers une première et une deuxième sortie optique du système de couplage,
- la figure 7 illustre un ensemble de mesure selon la variante de l'invention de ce premier mode de réalisation de l'invention de l'invention dans lequel le système de couplage optique est selon la possibilité de l'invention illustré sur la figure 5,
- le figure 8 illustre un ensemble de mesure selon un deuxième mode de réalisation dans lequel un système de mesure de l'ensemble de mesure comprend un unique analyseur de signaux optiques pour analyser les premiers et les deuxièmes signaux optiques,
- la figure 9 illustre un ensemble de mesure selon un troisième mode de réalisation dans lequel le système de mesure de comprend une unique source optique pour émettre les premiers et les deuxièmes signaux optiques,

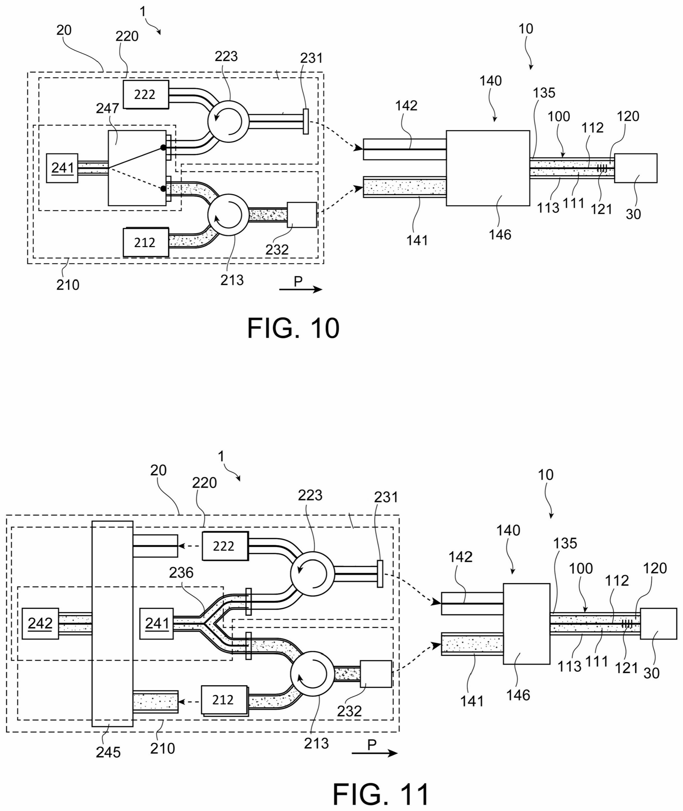

- la figure 10 illustre un ensemble de mesure selon une variante du troisième mode de réalisation dans lequel il est prévu un commutateur optique pour transmettre les premiers et les deuxièmes signaux optiques émis par la source optique vers respectivement la première et la deuxième sortie optique du système de couplage,
- la figure 11 illustre un ensemble de mesure selon un quatrième mode de réalisation dans lequel le système de mesure de comprend une unique source optique pour émettre les premiers et les deuxièmes signaux optiques et un unique analyseur de signaux optiques pour analyser les premiers et les deuxièmes signaux optiques,

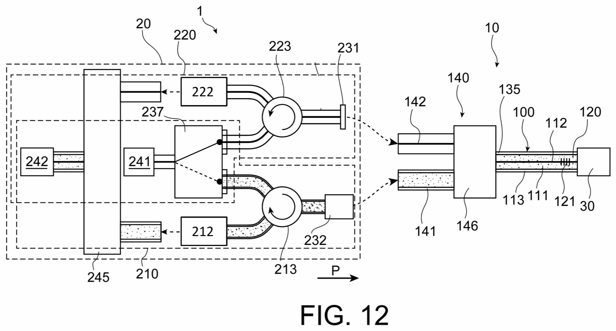

- la figure 12 illustre un ensemble de mesure selon une variante du quatrième mode de réalisation dans lequel il est prévu un commutateur optique pour transmettre les premiers et les deuxièmes signaux optiques émis par la source optique vers respectivement la première et la deuxième sortie optique du système de couplage.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Description des modes de réalisation

L'invention a pour objet, comme montré sur la figure 1, un ensemble de mesure 1 comprenant un système de mesure 20 et un équipement de mesure 30 connectés l'un à l'autre par une fibre optique de connexion 100, l'équipement de mesure 30 et la fibre optique de connexion 100 formant ensemble un dispositif de mesure 10.

Plus précisément et selon un exemple d'application préférentiel de l'invention, dans le présent mode de réalisation, l'ensemble de mesure 1 est un ensemble de mesure de vibration acoustique pour mesurer les vibrations acoustiques d'une turbomachine, non illustrée. L'ensemble de mesure 1 comporte ainsi, en tant qu'équipement de mesure, un capteur optique de vibration acoustique similaire au capteur acoustique commercialisé par la société Phonoptics^{™} et la fibre optique de connexion 100 comporte un réseau de Bragg inscrit. Bien entendu cet exemple de réalisation donné dans le cadre de ce premier mode de réalisation est fourni qu'à titre illustratif et n'est nullement limitatif. En effet, l'homme du métier étant à même d'extrapoler l'enseignement de la présente demande à d'autre type d'équipement de mesure apte à communiquer avec un système de mesure par des signaux optiques et à d'autre type de fonctionnalisation de la fibre optique de connexion 100 comme cela ressort de la présente description. De même, le dispositif de mesure selon l'invention ne se limite pas à l'équipement des seules turbomachines et vise également d'autres types d'appareillages, tel que par exemple les trains d'atterrissage ou encore des pièces de fuselage de cette même turbomachine.

On notera ainsi qu'un tel équipement de mesure 30 est un appareil de mesure en tant que tel et est donc distinct d'une simple portion de fibre optique permettant de faire par exemple une simple mesure de réflectométrie. Ainsi, la connexion entre l'équipement de mesure 30 est la fibre optique de connexion 100 peut être obtenue au moyen d'un connecteur adapté, non illustré, celui-ci pouvant être aussi bien un connecteur réversible, permettant une connexion/déconnexion aisée de l'équipement de mesure 30, qu'un connecteur permanent, la déconnexion nécessitant de démonté et/ou d'endommager le connecteur.

Ainsi, l'ensemble de mesure 1 selon ce premier mode de réalisation est destiné à équiper une turbomachine avec l'équipement de mesure 30, la fibre optique de connexion 100 et le système de mesure 20 installés à demeure dans la turbomachine.

En variante il est envisageable qu'une seule partie de l'ensemble de mesure 1, à savoir l'équipement de mesure 30 et la fibre optique de connexion 100 formant le dispositif de mesure 10, soit installée à demeure dans la turbomachine, le système de mesure étant alors connecté à la fibre optique de connexion 100 uniquement dans le cadre d'opération de maintenance de la turbomachine.

Un ensemble de connexion 1 selon le premier mode de réalisation de l'invention comprend plus précisément :
- le équipement de mesure 30,
- la fibre optique de connexion 100 comprenant une première extrémité 131 par laquelle elle est connectée au équipement de mesure 30, et une deuxième extrémité 135 opposée à la première extrémité 131,
- un système de couplage 140 compris dans la deuxième extrémité 135 de la fibre optique de connexion 100,
- le système de mesure optique 20 configuré pour interroger l'équipement de mesure au moyen de premiers signaux optiques dans une première plage de longueurs d'onde λ1, le système de mesure optique 20 est connecté à la deuxième extrémité 135 de la fibre optique de connexion 100 au travers du système de couplage 140 et est ainsi en communication avec l'équipement de mesure 30 par la fibre optique de connexion 100.

L'équipement de mesure 30 est un équipement de mesure, tel qu'un capteur, adapté pour être interrogé au moyen de signaux optiques. Ainsi, un tel équipement de mesure 30 peut être par exemple un capteur de vibration acoustique, un capteur de pression ou un capteur de température basé sur une mesure optique de déplacement d'une membrane tel que les capteurs commercialisés par Phonoptics^{™}. Pour plus d'information sur de tels capteurs, il est possible de se conférer au document US 2017/307437.

Avec de tels capteurs, l'interrogation de l'équipement de mesure 30 par le système de mesure optique 20 est réalisée en déterminant le déplacement d'une membrane à partir d'un taux de réflexion du signal optique transmis par la fibre optique de connexion sur ladite membrane. Le déplacement de cette membrane étant directement lié à la grandeur à mesurer, il est possible de déterminer la grandeur recherchée, telle qu'une vibration acoustique, une pression et une température.

Bien entendu, en variante à de tels capteurs, le équipement de mesure 20 peut être autre, tel que par exemple un capteur actif de température, de pression ou encore un capteur acoustique, celui-ci étant configuré pour transmettre le signal de mesure optiquement au système de mesure 20 par l'intermédiaire de la fibre optique de connexion 100.

Le équipement de mesure 30 est connecté à la fibre optique de connexion 100.

La fibre optique de connexion 100 est comme illustré sur la figure 1, une fibre optique multi-cœur comprenant un premier cœur optique 111 et un deuxième cœur optique 112 entourés d'une gaine optique 113.

Le premier cœur optique 111 est un cœur optique multimode dans la première plage de longueurs d'onde λ1 apte à transmettre des signaux optiques dans la première plage de longueurs d'onde λ1, ou autrement dit, des signaux optiques dont la longueur d'onde est comprise dans la première plage de longueurs d'onde.

Le deuxième cœur optique 112 est un cœur optique monomode dans une deuxième plage de longueur d'onde λ2 apte à transmettre des signaux optiques dans la deuxième plage de longueurs d'onde λ2, ou autrement dit, des signaux optiques dont la longueur d'onde est comprise dans la deuxième plage de longueurs d'onde λ2.

On notera que, d'une manière préférentielle, la première plage de longueurs d'onde λ1 est distincte de la deuxième plage de longueurs d'onde λ2, la première plage de longueurs d'onde λ1 présentant, d'une manière particulièrement avantageuse, sa longueur d'onde minimale supérieure à la longueur d'onde maximale de la deuxième plage de longueurs d'onde λ2. C'est cette dernière configuration qui est mise en œuvre dans le présent premier mode de réalisation.

Néanmoins, selon une possibilité de l'invention, la première plage de longueurs d'onde λ1 et la deuxième plage de longueurs d'onde λ2 peuvent présenter au moins une sous-plage de longueurs d'onde en commun voire être sensiblement identique.

La fibre optique de connexion 100 comprend une première portion de fibre optique fonctionnalisée 120 adaptée pour dans la deuxième plage de longueurs d'onde λ2 une caractéristique optique variant avec un paramètre environnemental de la fibre optique de connexion 100.

Selon une possibilité préférée de l'invention, de manière à permettre de mesurer le paramètre environnemental de la fibre optique de connexion 100, la première portion de fibre optique fonctionnalisée 120 est comprise dans la première extrémité 131.

La première portion de fibre optique fonctionnalisée 120 peut comporter par exemple un réseau de Bragg 121 inscrit dans le deuxième cœur optique 112, ledit réseau de Bragg 121 présentant une fréquence de résonance comprise dans la deuxième plage de longueurs d'onde λ2. Dans une telle configuration, la caractéristique optique présentée par la première portion de fibre optique fonctionnalisée 120 dans la deuxième plage de longueurs d'onde λ2 et variant avec un paramètre environnemental de la fibre optique de connexion 100 est la fréquence de résonnance du réseau de Bragg 121.

En effet, conformément aux connaissances de l'homme du métier, la fréquence de résonnance d'un réseau de Bragg inscrit dans un cœur de fibre optique varie avec des paramètres environnementaux de la fibre optique dont notamment avec la température et les contraintes appliquées sur la fibre optique. Ainsi selon cette possibilité, par une mesure de la fréquence de résonnance du réseau de Bragg à partir de deuxièmes signaux optiques dans la deuxième plage de longueurs d'onde λ2, il est possible d'identifier au moins un paramètre environnemental de la fibre optique, par exemple la température.

En variante de l'invention non illustrée, la première portion de fibre optique fonctionnalisée 120 peut présenter une variation de la composition du deuxième cœur optique, par exemple par un dopage du cœur, une variation de composition de la gaine, ou encore l'ajout d'un revêtement au niveau de la première portion de fibre optique fonctionnalisée 120 ceci de manière à ce que la première portion de fibre optique présente une caractéristique optique variant avec un paramètre environnemental de la fibre optique, tel que la température ou la présence d'une substance spécifique. Une telle variation de caractéristique peut être, par exemple, une modification d'indice optique, ou encore une modification de signal de fluorescence.

Comme illustré sur la figure 1, la deuxième extrémité 135 de la fibre optique de connexion 100 comprend le système de couplage 140 sur lequel le premier cœur optique 111 et le deuxième cœur optique 112 sont séparés dans respectivement un premier segment de fibre optique 136 et un deuxième segment de fibre optique 137, ceci selon le principe d'un coupleur à double gaine, également connu sous la dénomination anglaise de « double-clad coupler » tel que décrit dans le document US 8792757.

Un tel coupleur double gaine est réalisé par l'assemblage à chaud d'une fibre optique à double cœur avec une fibre optique simple cœur. La fibre optique obtenue lors d'un tel assemblage présente une partie centrale double cœur et présente au niveau de chacune de ses extrémités deux bras de sortie correspondant respectivement à la fibre optique simple cœur et à la fibre optique à double cœur qui ont été assemblées l'une à l'autre. De plus, avec un tel assemblage, le dimensionnement des bras de sortie permet de s'assurer un couplage optique du premier cœur avec uniquement le bras de sortie simple cœur et un optique couplage du deuxième cœur avec uniquement le bras de sortie double cœur Dans le cadre de l'invention, les bras correspondant respectivement à la fibre optique simple cœur et à la fibre optique à double cœur ont été supprimés au niveau de la première extrémité 131 ceci afin de permettre une connexion à l'équipement de mesure 30.

Ainsi, de cette manière, avec une telle configuration, le système de couplage 140 comprend un premier segment de fibre optique, correspondant donc à la fibre optique simple cœur, couplés optiquement au premier cœur optique 111 et découplé optique du deuxième cœur optique 112, et un deuxième segment de fibre optique 137, correspondant donc à la fibre optique double cœur, couplé optiquement au deuxième cœur optique 112 et découplé optique du premier cœur optique 112. De cette manière, le premier segment de fibre optique 136 permet de récupérer l'intégralité des premiers signaux optiques dans la première plage de longueurs d'onde λ1 transmis par l'équipement de mesure 30 alors que le deuxième segment de fibre optique 137 permet de récupérer la majorité des deuxièmes signaux optiques dans la plage deuxième plage de longueurs d'onde λ2 en provenance de la première portion de fibre optique fonctionnalisée 131.

Chacun du premier et du deuxième segment de fibre optique 136, 137 est connecté au système de mesure optique 20 en comportant respectivement la première et la deuxième sortie optique 141, 142 du système de couplage 140.

Le système de mesure optique 20, comprend :
- une première unité de mesure 210 configurée pour interroger le équipement de mesure 30 au moyen de premiers signaux optiques dans la première plage de longueurs d'onde λ1, ladite première unité de mesure 210 étant connectée au premier segment de fibre optique 136 au travers de la première sortie optique 141, et
- une deuxième unité de mesure 220 étant configurée pour mesurer la caractéristique optique de la première portion de fibre optique fonctionnalisée 120 au moyen de deuxièmes signaux optiques dans la deuxième plage de longueurs d'onde λ2, ladite deuxième unité de mesure 220 de traitement étant connectée au deuxième segment de fibre optique 137, au travers de la deuxième sortie optique 142.

Comme illustré sur la figure 1, la première unité de mesure 210 comprend :
- une première entrée optique 231 par laquelle la première unité de mesure 210 est connectée à la première sortie optique 141, et donc au premier segment de fibre optique 136 de la fibre optique de connexion 100, ladite première entrée optique 231 étant munie d'un filtre optique sélectif en longueur d'onde pour filtrer les deuxièmes signaux optiques dans la deuxième plage de longueurs d'onde λ2 à l'entrée de la deuxième unité de mesure 220,
- un premier circulateur optique 213 reliant une première source optique 211 à la première entrée optique 231 et la première entrée optique 231 à un premier analyseur de signaux optiques 212 ceci de manière à ce que les signaux optiques issus de la première source optique 211 soient transmis à la fibre optique de connexion 100 et que les signaux optiques issus de la fibre optique de connexion 100 soient transmis au première analyseur de signaux optiques 212,
- la première source optique 211 est apte à générer des signaux optiques à la première plage de longueurs d'onde λ1 pour interroger l'équipement de mesure 30,
- le premier analyseur de signaux optiques 212 apte à mesurer les signaux optiques à la première plage de longueurs d'onde λ1 transmis par l'équipement de mesure 30.

On notera que le premier circulateur optique 213 forme un premier élément de connexion adapté pour connecter la première source optique 211 et le premier analyseur de signaux optiques 212 à la première sortie optique 141 du système de couplage 140.

Le filtre optique est un filtre sélectif en longueur d'onde et adapté pour atténuer au moins en partie les signaux optiques dans la deuxième plage de longueurs d'onde λ2 et transmettre sensiblement sans atténuation les premiers signaux optiques dans la première plage de longueurs d'onde λ1.

On notera également que la première entrée optique 231 et la première sortie optique 141, incluse dans le premier segment de fibre optique 136, sont connectées mécaniquement l'une à l'autre. Une telle connexion mécanique peut, par exemple être obtenue par une soudure optique, l'utilisation de connectique appropriée ou tout autre type de connexion optique appropriée conformément aux connaissances générale de l'homme du métier.

Selon la variante dans laquelle seuls le premier élément de mesure et la fibre optique de connexion équipent l'appareil à surveiller, tel qu'une turbomachine, la connexion entre la fibre optique de connexion 100 et le système de mesure 20 n'étant réalisé que dans le cadre d'opérations de maintenance, la connexion mécanique entre la première entrée optique 231et la première sortie optique 141 est une connexion réversible ceci de manière à autoriser des opérations de connexion et de déconnexion lors desdites opérations de maintenance.

La première source optique 211 est une source optique apte à émettre un signal optique dans la première plage de longueurs d'onde λ1 ceci soit de manière continue soit de manière transitoire, telle que par l'émission de pulse de lumière. Ainsi, la première source optique 211 est avantageusement une source laser, un laser accordable, une diode électroluminescente, également connu sous le sigle DEL ou le sigle anglais LED pour « Light-emitting diode », une diode électroluminescente laser, une diode superluminscente, ou toutes source de lumière qui soit apte à émettre un rayonnement électromagnétique sur une plage de longueur d'onde et qui soit apte à être confinée dans une fibre optique. Ainsi, par exemple, la première source optique 211 peut être un laser optique, préférentiellement à semiconducteur, dont au moins une longueur d'onde d'émission correspond à la première plage de longueurs d'onde.

Le premier analyseur de signaux optiques 212est configuré pour mesurer le signal optique dans la première plage de longueurs d'onde λ1 transmis par l'équipement de mesure 30. Un tel premier analyseur de signaux optiques 212 peut, par exemple, être fourni par une photodiode apte à mesurer l'intensité du signal optique transmis par le équipement de mesure 30. En variante, le premier analyseur de signaux optiques 212 peut être apte à mesurer une autre caractéristique du signal optique transmis par le équipement de mesure, tel qu'une fréquence de pulsation, un signal de fluorescence ou un spectre en longueur d'onde des premiers signaux optiques, via par exemple une rangée de détecteurs, ou encore une longueur d'onde de résonnance.

Le système de mesure optique 20 peut en outre comporter une unité de traitement, non illustrée, apte à commander la première source optique 211 et le premier analyseur de signaux optiques, de manière à permettre de déterminer à partir de la mesure du signal optique dans la première plage de longueurs d'onde λ1 transmis par le équipement de mesure 30 une valeur caractéristique d'un paramètre environnemental mesuré par le équipement de mesure 30.

Comme illustré sur la figure 1, la deuxième unité de mesure 220 comprend :
- une deuxième entrée optique 232 par laquelle la deuxième unité de mesure 220 est connectée au deuxième segment de fibre optique 137 de la fibre optique de connexion 100,
- un deuxième circulateur optique 223 reliant une deuxième source optique 221 à la deuxième entrée optique 232 et la deuxième entrée optique 232 à un deuxième analyseur de signaux optiques 222 ceci de manière à ce que les signaux optiques issus de la deuxième source optique 221 soient transmis à la fibre optique de connexion 100 et que les signaux optiques issus de la fibre optique de connexion 100 soient transmis au deuxième analyseur de signaux optiques 222,

- la deuxième source optique 221 est apte à générer des signaux optiques dans la deuxième plage de longueurs d'onde λ2 afin d'effectuer la meure de la caractéristique optique de la première portion de fibre optique fonctionnalisée 120,
- le deuxième analyseur de signaux optiques 222 apte à mesurer les signaux optiques transmis par la portion de fibre.

On notera que le deuxième circulateur optique 223 forme un deuxième élément de connexion adapté pour connecter la deuxième source optique 221 et le deuxième analyseur de signaux optiques 222 à la deuxième sortie optique 142 du système de couplage 140.

La deuxième entrée optique 232 et la deuxième sortie optique 142, incluse dans le deuxième segment de fibre optique137, sont connectées mécaniquement l'une à l'autre. Une telle connexion mécanique peut, par exemple être obtenue par une soudure optique, l'utilisation de connectique appropriée ou tout autre type de connexion optique appropriée conformément aux connaissances générale de l'homme du métier.

Selon la variante dans laquelle seuls le premier élément de mesure et la fibre optique de connexion équipent l'appareil à surveillé, tel qu'une turbomachine, la connexion entre la fibre optique de connexion 100 et le système de mesure 20 n'étant réalisée que dans le cadre d'opérations de maintenance, la connexion mécanique entre la deuxième entrée optique 232 et la deuxième sortie optique 142 est une connexion réversible ceci de manière à autoriser des opérations de connexion et de déconnexion lors desdites opérations de maintenance.

La deuxième source optique 211 est une source optique apte à émettre un signal optique dans la deuxième plage de longueurs d'onde λ1 ceci soit de manière continue soit de manière transitoire, telle que par l'émission de pulse de lumière. Ainsi, la première source optique 211 est avantageusement une source laser, un laser accordable, une diode électroluminescente, également connu sous le sigle DEL ou le sigle anglais LED pour « Light-emitting diode », une diode électroluminescente laser, une diode superluminscente, ou toutes source de lumière qui soit apte à émettre un rayonnement électromagnétique sur une plage de longueur d'onde et qui soit apte à être confinée dans une fibre optique. Ainsi, par exemple, la première source optique 211 peut être un laser optique, préférentiellement à semiconducteur, dont au moins une longueur d'onde d'émission correspond à la première plage de longueurs d'onde.

Le deuxième analyseur de signaux optiques 212 est configuré pour mesurer le signal optique dans la deuxième plage de longueurs d'onde λ2 transmis par la première portion de fibre optique fonctionnalisée 120. Un tel deuxième analyseur de signaux optiques 212 peut, par exemple, être fourni par une photodiode apte à mesurer l'intensité du signal optique transmis par le équipement de mesure 30. En variante, le premier analyseur de signaux optiques 212 peut être apte à mesurer une autre caractéristique du signal optique transmis par le équipement de mesure, tel qu'une fréquence de pulsation, un signal de fluorescence ou un spectre en longueur d'onde des premiers signaux optiques, via par exemple une rangée de détecteurs, ou encore une longueur d'onde de résonnance.

Dans où le cas où la première portion de fibre optique fonctionnalisée 120 comprend un réseau de Bragg 121, l'analyseur peut être apte à déterminer une fréquence de résonnance du réseau de Bragg 121 ou une variation de fréquence de résonnance de ce même réseau de Bragg 121.

Lorsque le système de mesure optique 20 comporte une unité de traitement, celle-ci peut également être apte à commander la deuxième source optique 221 et le deuxième analyseur de signaux optiques 222, de manière à permettre de déterminer à partir de la mesure des deuxièmes signaux optiques dans la deuxième plage de longueurs d'onde λ2 transmis par la première portion de fibre optique fonctionnalisée une valeur caractéristique d'un paramètre environnemental mesuré à partir de la caractéristique optique de la première portion de fibre optique fonctionnalisée 120.

On peut noter que, dans le cadre de l'invention, il est parfaitement envisageable que l'unité de traitement comporte une première et une deuxième sous-unité dédiées respectivement à la première unité de mesure 210 et à la deuxième unité de mesure 220. De même une telle unité de traitement peut être fournie sous la forme d'un circuit électronique dédié ou être intégré, sous la forme d'un programme, à un ordinateur, tel qu'un ordinateur embarqué dans l'appareil à surveiller.

Un tel ensemble de mesure 100 permet de mesurer les paramètres d'un appareil à surveiller ceci à partir à la fois du équipement de mesure 30 et à la fois de la première portion de fibre optique fonctionnalisée 120.

Pour la suite de cette description, il est à noter que la figure 1 illustre par la flèche P une direction de propagation des signaux optiques dite amont correspondant aux signaux optiques allant du système de mesure 20 vers le équipement de mesure 30. La direction opposée, correspondant à direction allant du équipement de mesure 30 vers le système de mesure 20 est dite avale.

Comme le montre les figures 2A à 2E, le principe de fonctionnement d'un tel équipement de mesure est le suivant. La première source optique 211 émet des premiers signaux optiques dans la première plage de longueurs d'onde λ1 en direction de la fibre optique de connexion 100, ledit signal étant transmis par l'intermédiaire du premier circulateur optique 213 à la première entrée optique 231, comme le montre la coupe C-C selon la direction amont de la figure 2E. Les premiers signaux optiques dans la première plage de longueurs d'onde λ1 est ensuite transmis par la première entrée optique 231 à la première sortie optique 141, et donc au premier segment de fibre optique 136, comme le montre la coupe B-B selon la direction amont de la figure 2C. Les premiers signaux optiques dans la première plage de longueurs d'onde λ1 sont alors confinés dans le premier cœur optique et coexiste avec les deuxièmes signaux optiques à la deuxième longueur λ2, émis par la deuxième unité de mesure 220 et confinés dans le deuxième cœur optique 112, au niveau du coupleur à double gaine, comme montré par la coupe A-A selon direction amont de la figure 2A. Les premiers signaux optiques dans la première plage de longueurs d'onde λ1 sont ensuite transmis au équipement de mesure 30 pour permettre son interrogation.

Après interaction avec le équipement de mesure 30, les premiers signaux optiques, alors dit de mesure, dans la première plage de longueurs d'onde λ1 sont transmis par l'équipement de mesure 30 à la fibre optique de connexion 130 comme montré par la coupe A-A selon direction avale de la figure 2B. Les premiers signaux optiques de mesure dans la première plage de longueurs d'onde λ1 sont alors transmis avec les deuxièmes signaux optiques dans la deuxième plage de longueurs d'onde λ2, également dits de mesure, en provenance de la première portion de fibre optique fonctionnalisée 120. Le coupleur à double gaine permet de séparer les premiers signaux optiques de mesure dans la première plage de longueurs d'onde λ1, transmis uniquement au premier segment de fibre optique 136, d'une majorité des deuxièmes signaux optiques de mesure dans la deuxième plage de longueurs d'onde λ2, la majorité de ces deuxièmes signaux optiques, restant confinée dans le deuxième cœur optique 112, étant dirigée vers le deuxième segment de fibre optique 137, comme le montre la coupe D-D direction avale illustrée sur la figure 2F. Les premiers signaux de mesure dans la première plage de longueurs d'onde λ1 sont ensuite transmis du premier segment de fibre optique 136 vers la première unité de mesure 210 au travers de la première sortie 141 et du filtre optique 232 ceci afin de supprimer la partie minoritaire des deuxièmes signaux optiques de mesure dans la deuxième plage de longueurs d'onde λ2 restante, comme le montre la coupe C-C selon la direction avale de la figure 2E. De cette manière seuls les premiers signaux optiques de mesure dans la première plage de longueurs d'onde λ1 sont transmis au premier analyseur 212 sans que les deuxièmes signaux optiques de mesure dans la deuxième plage de longueurs d'onde λ2 ne perturbent l'analyse.

D'une manière similaire, La deuxième source optique 221 émet des deuxièmes signaux optiques dans la deuxième plage de longueurs d'onde λ2 en direction de la fibre optique de connexion 100, ledit signal étant transmis par l'intermédiaire du deuxième circulateur optique 223 à la deuxième entrée optique 232, comme le montre la coupe E-E selon la direction amont de la figure 2G. Les deuxièmes signaux optiques dans la deuxième plage de longueurs d'onde λ2 sont ensuite transmis par la deuxième entrée optique 232 au deuxième segment de fibre optique 137, comme le montre la coupe D-D selon la direction amont de la figure 2F. Les deuxièmes signaux optiques dans la deuxième plage de longueurs d'onde λ2 sont alors majoritairement confinés dans le deuxième cœur optique et sont transmis en parallèle aux premiers signaux optiques à dans la première plage de longueurs λ1 au niveau du coupleur à double gaine, comme montré par la coupe A-A selon direction amont de la figure 2A. Les deuxièmes signaux optiques dans la deuxième plage de longueurs d'onde λ2 sont ensuite transmis à la première portion de fibre optique fonctionnalisé 120 pour permettre son interrogation.

Après interaction avec la première portion de fibre optique 120, les deuxièmes signaux optiques, alors dit de mesure, dans la deuxième plage de longueurs d'onde λ2 sont transmis par la première portion de fibre optique fonctionnalisée 120 au reste de la fibre optique de connexion 130 comme montré par la coupe A-A selon direction avale de la figure 2B. Les deuxièmes signaux optiques de mesure dans la deuxième plage de longueurs d'onde λ2 sont alors transmis avec les premiers signaux optiques de mesure dans la première plage de longueurs d'onde λ1 en provenance de l'équipement de mesure 30. Le coupleur à double gaine permet alors de séparer la majorité des deuxièmes signaux optiques de mesure dans la deuxième plage de longueurs d'onde λ2 transmis au deuxième segment de fibre optique 137, des premiers signaux optiques de mesure dans la première longueur d'onde λ1 qui sont dirigés uniquement vers le premier segment de fibre optique 136, comme le montre la coupe D-D selon la direction aval de la figure 2F. La majorité des deuxièmes signaux optiques de mesure dans la deuxième plage de longueurs d'onde λ2 est ensuite transmis du deuxième segment de fibre optique 137 vers la deuxième unité de mesure 220 au moyen de la deuxième entrée optique 232, comme le montre la coupe E-E selon la direction avale de la figure 2G. De cette manière seule cette majorité des deuxièmes signaux optiques de mesure dans la deuxième plage de longueurs d'onde λ2 est transmis au deuxième analyseur 221 sans que les premiers signaux optiques de mesure dans la première longueur d'onde λ1 ne perturbent l'analyse.

On notera que dans le cadre de la description du principe de l'invention ci-dessus, lorsqu'il est indiqué que les premiers et deuxièmes signaux optiques, qu'ils soient de mesures ou d'interrogation, sont transmis ensemble, il est à noter que cette transmission « ensemble » se fait parallèlement les uns aux autres. En effet, conformément au principe de ce premier mode de réalisation de l'invention, les premiers signaux optiques dans la première plage de longueurs d'onde λ1 sont alors confinés dans le premier cœur optique 111 alors que la majorité des deuxièmes signaux optiques dans la deuxième plage de longueurs d'onde est confinée dans le deuxième cœur optique 112, l'interaction entre ces signaux s'en trouve limité.

Ainsi, avec un tel ensemble de mesure 1, comme décrit ci-dessus, il est possible de mettre en œuvre un procédé de mesure comprenant les étapes suivantes :
- émission de premiers signaux optiques, dits d'interrogations, dans la première plage de longueurs d'onde λ1, lesdits premiers signaux optiques étant transmis à la première sortie optique 141 du système de couplage 140 et le premier cœur optique 111 afin d'interroger l'équipement de mesure 30,
- analyse des premiers signaux optiques, dits de mesures, récupérés à partir de la première sortie optique 141 du système de couplage 140 après interaction avec l'équipement de mesure 30,
- émission de deuxièmes signaux optiques, dits d'interrogation, dans la deuxième plage de longueurs d'onde λ2, les deuxièmes signaux optiques étant transmis à la deuxième sortie optique 142 du système de couplage 140 et le deuxième cœur optique 112 afin d'interagir avec la première portion de fibre optique fonctionnalisée 120,
- analyse des deuxièmes signaux optiques, dits de mesures, récupérés à partir de la deuxième sortie optique 142 du système de couplage 140 après interaction avec la première portion de fibre optique fonctionnalisée 120 ceci afin déterminer la caractéristique optique de la première portion de fibre optique fonctionnalisée 120 et le paramètre environnemental de la fibre optique de connexion 100 correspondant.

Bien entendu si dans le présent mode de réalisation, comme montré sur les figures 1 à 2G, la fibre optique de connexion est une fibre optique de connexion 100 multi-cœur à cœurs concentriques, d'autre configuration sont parfaitement envisageable dans le cadre de l'invention comme le montre les figure 3 à 4C.

En effet, la figure 3 illustre une fibre optique de connexion 100 selon l'invention en figurant un axe de coupe F-F et les figures 4A à 4C illustrant trois exemples de configurations de premier et deuxième cœurs optiques 111, 112 envisageable dans le cadre de l'invention. Ainsi la figure 4A montre une configuration similaire à celle du premier mode de réalisation décrit ci-dessus dans lequel le premier et le deuxième cœur optique 111, 112 sont concentriques, le deuxième cœur optique 112 étant logé dans le premier cœur optique 111. En variante, comme montré sur la figure 4B, le deuxième cœur optique 112 peuvent être excentrés vis-à-vis d'un centre de la fibre optique de connexion 100 et disjoints. Selon une autre variante de l'invention, le deuxième cœur optique 112 peut être contenu dans le premier cœur optique 111 lui-même centré vis-à-vis du centre de la fibre optique de connexion 100, le deuxième cœur optique étant excentré vis-à-vis du centre de la fibre optique de connexion 100.

En variante de ce premier mode de réalisation et selon une possibilité de l'invention, le système de couplage peut être, comme illustré sur les figures 5 et 6, extérieur à la fibre optique de connexion 100.

Ainsi, selon une première possibilité de cette variante illustrée sur la figure 5, le système de couplage 140 peut être un coupleur basé sur un séparateur 146 adapté pour séparer les premiers et les deuxièmes signaux optiques à partir d'une caractéristique distinctive entre les premiers et les deuxièmes signaux.

Dans le cas où la première plage de longueurs d'onde et la deuxième plage de longueurs d'onde sont distinctes l'une de l'autre, le séparateur 146 peut être basé sur un composant optique dichroïque, tel qu'un miroir dichroïque ou un filtre dichroïque.

Dans le cas où la première plage de longueurs d'onde et la deuxième plage de longueur d'onde présente sont au moins partiellement confondues, le séparateur 146 peut être basé sur une autre caractéristique distinctive de la première plage de longueurs d'onde et de la deuxième plage de longueurs d'onde, tel qu'une polarisation ou encore une dimension de faisceau. Ainsi, par exemple, dans le cas où ladite caractéristique la polarisation, un tel séparateur 146 peut être une lame séparatrice en polarisation, également connu sous la dénomination anglaise « polarization beam splitter ».

La figure 5 illustre un exemple pratique d'un système de couplage 140selon cette possibilité dans lequel où la première plage de longueurs d'onde et la deuxième plage de longueurs d'onde sont distinctes l'une de l'autre et dans lequel le séparateur 146 est un miroir dichroïque configurer pour réfléchir les signaux optiques dans la première plage de longueurs d'onde λ1 et configurer pour transmettre les signaux optiques dans la deuxième plage de longueurs d'onde λ2.

Dans cet exemple pratique, le séparateur est placé à 45° de l'axe optique de la fibre optique de connexion 100, de cette manière, les premiers signaux optiques de mesure sont réfléchis à 90° de l'axe optique de la fibre optique de connexion dans la direction haute de la figure vers la première sortie optique 141 et les deuxièmes signaux optiques de mesure sont transmis sans modification de sa direction de propagation vers la deuxième sortie optique 142.

On notera que, dans le présent exemple pratique, le système de couplage 140 est préférentiellement adapté pour permettre une bonne injection des premiers signaux optiques, émis par la première source optique 211, dans le premier cœur optique 111 et les deuxièmes signaux optiques, émis par la deuxième source optique 221, dans le deuxième cœur optique 112. Une telle adaptation peut être obtenue par une double optimisation, celle de la configuration distincte, notamment en ce qui concerne le dimensionnement de faisceau et de son état de focalisation, entre les premiers signaux optiques et la configuration de l'optique d'injection 145, ici une lentille convergente, utilisée pour l'injection des premiers et deuxièmes signaux optiques dans la fibre optique de connexion.

On notera en outre, une telle adaptation peut également venir de la configuration de la fibre optique de connexion 100 dont, selon une possibilité de l'invention, le deuxième cœur optique 112 peut ne pas être adapté pour guider les signaux optiques dans la première plage de longueur d'onde λ1.

Selon une deuxième possibilité de cette variante, le système de couplage 140 peut être basé sur un diviseur de faisceaux 147 adapté pour diviser chacun des premiers et des deuxièmes signaux en un premier et un deuxième sous-faisceau dirigés respectivement vers la première et la deuxième sortie optique 141, 142 du système de couplage 140. Selon cette deuxième possibilité, le diviseur de faisceau 147 peut notamment être fourni par un miroir semi-réfléchissant également connu sous la dénomination anglaise « beam splitter ».

La figure 6 illustre un exemple pratique d'un système de couplage 140 selon cette deuxième possibilité dans lequel le diviseur de faisceaux 147 est un miroir semi-réfléchissant. Comme montré sur la figure 6, un tel système de couplage présente une configuration sensible identique à celle du système de couplage selon la première possibilité avec une substitution du séparateur 146 par le diviseur de faisceau 147.

La figure 7 illustre, un ensemble de mesure 1 selon cette variante de l'invention dans lequel le système de couplage 140 est externe à la fibre optique de connexion 100 ceci selon la première possibilité dans laquelle le coupleur comprend un séparateur 146 pour séparer les premiers signaux optiques des deuxièmes signaux optique. Comme illustré sur la figure 7 et afin de facilité la connexion du système de couplage avec le système de mesure 20, les premiers signaux optiques sont injectés, après séparation, dans une première section de fibre optique comportant un cœur optique multimode dans la première plage de longueur d'onde. De la même façon, les deuxièmes signaux optiques sont injectés, après séparation, dans une deuxième section de fibre optique comportant un cœur optique monomode dans la deuxième plage de longueurs d'onde.Selon une telle variante, outre les caractéristiques liés au système de couplage 140 lui-même, le fait que la fibre optique de connexion 100 n'inclus pas au niveau de sa deuxième extrémité 135 le système de couplage 140 et le fait que la fibre optique de connexion 100 est donc connectée au système de couplage 140 par sa deuxième extrémité 135, l'ensemble de mesure 1 présente une configuration similaire à celle décrite dans le cadre du premier mode de réalisation.

La figure 8 illustre un ensemble de mesure selon un deuxième mode de réalisation selon la variante de l'invention illustré sur la figure 7 et dans lequel il est prévu un unique analyseur de signaux optiques 242 en lieu et place des premiers et deuxième analyseur de signaux optiques 212, 222.

Ainsi, un ensemble de mesure selon ce deuxième mode de réalisation se distingue d'un ensemble de mesure selon la variante du premier mode de réalisation illustré sur la figure 7 en ce qu'il comporte un unique analyseur de signaux optiques 242 en lieu et place des premiers et deuxième analyseur de signaux optiques 212, 222, et en ce que l'ensemble de mesure comporte en outre un deuxième système de couplage245 adapté pour coupler les premier et les deuxièmes signaux de mesure au niveau d'une fibre optique d'entrée de l'unique analyseur de signaux optiques 242.

Dans ce deuxième mode de réalisation, l'unique analyseur de spectre est adapté pour analyser les premiers signaux optiques issus de l'interrogation de l'équipement de mesure 30 et pour analyser les deuxièmes signaux optiques après interaction avec la première portion de fibre optique fonctionnalisée 120 afin de déterminer la caractéristique optique de la première portion de fibre optique fonctionnalisée 120 et le paramètre environnemental de la fibre optique de connexion 100 correspondant.

Dans ce deuxième mode de réalisation, le premier circulateur optique 213 relit la première source optique 211 à la première entrée optique 231 et la première entrée optique 231 au deuxième système de couplage 245 ceci de manière à ce que les premiers signaux optiques d'interrogation issus de la première source optique 211 soient transmis à la fibre optique de connexion 100 et que les premiers signaux optiques de mesure issus de la fibre optique de connexion 100 soient transmis à l'unique analyseur de signaux optiques 242 au travers du deuxième système de couplage 245. Ainsi, le deuxième système de couplage 245 et le premier circulateur optique 213 forme ensemble un premier élément de connexion adapté pour connecter la première source optique 211 et l'unique analyseur de signaux optiques 242 à la première sortie du système de couplage 140.

De même, le deuxième circulateur optique 223 relie la deuxième source optique 221 à la deuxième entrée optique 232 et la deuxième entrée optique 232 au deuxième système de couplage 245 ceci de manière à ce que les deuxièmes signaux optiques d'interrogation issus de la deuxièmes source optique 221 soient transmis à la fibre optique de connexion 100 et que les deuxièmes signaux optiques de mesure issus de la fibre optique de connexion 100 soient transmis à l'unique analyseur de signaux optiques 242 au travers du deuxième système de couplage 245. Ainsi, le deuxième système de couplage 245 et le deuxième circulateur optique 223 forme ensemble un deuxième élément de connexion adapté pour connecter la deuxième source optique 212 et l'unique analyseur de signaux optiques 242 à la première sortie du système de couplage 140.

L'ensemble de mesure 1 selon le deuxième mode de réalisation présente un principe de fonctionnement similaire à celui de l'ensemble de mesure 1 selon le premier mode de réalisation, à la différence près que l'analyse des premiers et deuxièmes signaux optiques est mise en œuvre par l'unique analyseur de signaux optiques. Ainsi, selon la même possibilité que celle de l'ensemble de mesure 1 selon le premier mode de réalisation, l'interrogation de l'équipement de mesure 30 et celle de la première portion de fibre optique fonctionnalisée peuvent être réalisées en parallèle ou séquentiellement.

La figure 9 illustre un ensemble de mesure selon un troisième mode de réalisation selon la variante de l'invention illustré sur la figure 7 et dans lequel il est prévu une unique source optique 241 en lieu et place des première et deuxième sources optiques 211, 221.

Ainsi, un ensemble de mesure selon ce troisième mode de réalisation se distingue d'un ensemble de mesure selon la variante du premier mode de réalisation illustré sur la figure 7 en ce qu'il comporte une unique source optique 241 en lieu et place des première et deuxième source optique 212, 222, ladite source unique étant adaptée pour émettre à la fois dans la première et la deuxième plage de longueurs d'onde λ1, λ2 et en ce que l'ensemble de mesure comporte en outre un système de séparation de faisceau 236 pour transmettre les signaux optiques émis par l'unique source ceci en tant que premiers signaux optiques d'interrogation à la première entrée optique 231, et donc la première sortie optique 142, et, en tant que deuxièmes signaux optiques d'interrogation à la deuxième entrée optique 232.

Dans un tel troisième mode de réalisation, selon une première possibilité de l'invention et avec une première et une deuxième plage de longueurs d'onde adaptées, le système de séparation de faisceau 236 peut être adapté pour transmettre vers le premier circulateur optique 213 la partie du rayonnement émis correspondant à la première plage de longueurs d'onde, cette première partie correspondant alors aux premiers signaux optiques d'interrogation, et pour transmettre vers le deuxième circulateur optique 223 la partie du rayonnement émis correspondant à la deuxième plage de longueurs d'onde, , cette deuxième partie correspondant alors aux deuxièmes signaux optiques d'interrogation. Ainsi, une telle possibilité peut notamment être mise en œuvre au moyen d'une fibre optique à double cœur avec un deuxième cœur monomode adapté pour guider uniquement les signaux optiques dans la deuxième plage de longueurs d'onde. Selon cette même possibilité, il est possible de prévoir au niveau du séparateur des filtres dichroïques pour séparer les premiers signaux optiques d'interrogation des deuxièmes signaux optiques d'interrogation.

On peut noter que, conformément à la possibilité ci-dessus, dans le cas où l'unique source optique 241 est une source optique accordable en longueur d'onde, l'émission des premiers et deuxièmes signaux optiques sera nécessaire séquentielle, puisque la source optique ne peut pas dans une telle configuration émettre simultanément dans les première et deuxième plages de longueurs d'onde si ces dernières sont disjointes. Par contre, pour une source optique 241 qui est une source d'émission large bande, si cette dernière est adaptée, une telle configuration autorise une émission en parallèle des premiers et deuxièmes signaux optiques d'interrogation.

Selon une autre possibilité, dans laquelle les première et deuxième plages de longueurs d'onde sont au moins en partie confondues, le rayonnement électromagnétique émis par l'unique source optique 241 peut être séparé en deux signaux optiques sensiblement identique, les premiers signaux optiques, transmis vers le premier circulateur 213, et des deuxièmes signaux optiques transmis vers le deuxième circulateur optique 223. Selon cette possibilité l'émission des premiers et deuxièmes signaux est nécessairement réalisée en parallèle.

L'ensemble de mesure 1 selon le troisième mode de réalisation présente un principe de fonctionnement similaire à celui de l'ensemble de mesure 1 selon le premier mode de réalisation, à la différence près que l'émission des premiers et deuxièmes signaux optiques d'interrogation est réalisée par l'unique source optique 241. Ainsi, selon la même possibilité que celle de l'ensemble de mesure 1 selon le premier mode de réalisation, l'interrogation de l'équipement de mesure 30 et celle de la première portion de fibre optique fonctionnalisée, en fonction de la configuration de l'unique source optique 241 et du système de séparation de faisceau 236, peuvent être réalisées en parallèle ou séquentiellement.

La figure 10 illustre un ensemble de mesure selon une variante du troisième mode de réalisation de l'invention dans lequel en lieu et place d'un séparateur de faisceau 246 il est prévu un commutateur optique 247, également connu sous la dénomination anglaise « optical switch, apte à commuter les signaux optiques émis par l'unique source optique 241 entre respectivement le premier circulateur optique 213, ceci pour faire office de premiers signaux optiques d'interrogation, et le deuxième circulateur optique 223, ceci pour faire office de deuxièmes signaux optiques d'interrogation.

Selon une telle variante, le rayonnement électromagnétique émis par l'unique source optique est transmise successivement au premier et au deuxième circulateur optique 213,223.

Ainsi, si l'ensemble de mesure 1 selon le troisième mode de réalisation présente un principe de fonctionnement similaire à celui de l'ensemble de mesure 1 selon le troisième mode de réalisation, l'interrogation de l'équipement de mesure 30 et celle de la première portion de fibre optique fonctionnalisée ne peuvent être réalisés que séquentiellement par la transmission successive du rayonnement électromagnétique émis par l'unique source optique au premier et au deuxième circulateur optique 213,223..

La figure 11 illustre un ensemble de mesure selon un quatrième mode de réalisation correspondant à un ensemble de mesure selon le deuxième mode de réalisation dans lequel, conformément au troisième mode de réalisation, il est prévu une unique source optique 241 en lieu et place des première et deuxième sources optiques 211, 221.

Un tel ensemble de mesure combine les caractéristiques distinctives des ensembles de mesure des deuxième et troisième modes de réalisation vis-à-vis du premier mode de réalisation. Ainsi, le principe de fonctionnement d'un tel ensemble de mesure présente donc les mêmes considérations que celles d'un ensemble de mesure selon un troisième mode de réalisation. Dans ce quatrième mode de réalisation l'émission des premiers et deuxièmes signaux optiques d'interrogation est donc réalisée par l'unique source optique 241. Selon la même possibilité que celle de l'ensemble de mesure 1 selon le premier mode de réalisation, l'interrogation de l'équipement de mesure 30 et celle de la première portion de fibre optique fonctionnalisée, en fonction de la configuration de l'unique source optique 241 et du système de séparation de faisceau 236, peuvent être réalisées en parallèle ou séquentiellement.

La figure 12 illustre un ensemble de mesure selon une variante du quatrième mode de réalisation de l'invention dans lequel en lieu et place d'un séparateur de faisceau 246 il est prévu un commutateur optique 247, également connu sous la dénomination anglaise « optical switch, apte à commuter les signaux optiques émis par l'unique source optique 241 entre respectivement le premier circulateur optique 213, ceci pour faire office de premiers signaux optiques d'interrogation, et le deuxième circulateur optique 223, ceci pour faire office de deuxièmes signaux optiques d'interrogation.

Un tel ensemble de mesure combine les caractéristiques distinctives des ensembles de mesure du deuxième mode de réalisation et de la variante au troisième mode de réalisation vis-à-vis du premier mode de réalisation. Ainsi, le principe de fonctionnement d'un tel ensemble de mesure présente donc les mêmes considérations que celles d'un ensemble de mesure selon la variante au troisième mode de réalisation. Selon cette variante au quatrième mode de réalisation, 'interrogation de l'équipement de mesure 30 et celle de la première portion de fibre optique fonctionnalisée sont donc réalisés séquentiellement par la transmission successive du rayonnement électromagnétique émis par l'unique source optique au premier et au deuxième circulateur optique 213,223.

## Revendications

1. Dispositif de mesure (10) comprenant,
- un équipement de mesure (30) configuré pour être interrogé optiquement par un système de mesure (20) au moyen de premiers signaux optiques dans une première plage de longueurs d'onde (λ1),
- une fibre optique de connexion (100) comprenant une première extrémité (131) connectée à l'équipement de mesure (30) et une deuxième extrémité (135) destinée à être connectée au système de mesure (20), la fibre optique de connexion (100) comprenant au moins un premier cœur optique (111) multimode dans la première plage de longueurs d'onde (λ1) pour transmettre les premiers signaux optiques,
le dispositif de mesure (10) **étant caractérisé en ce que** la fibre optique de connexion (100) comprend en outre un deuxième cœur optique (112) monomode dans une deuxième plage de longueurs d'onde (λ2) pour transmettre des deuxièmes signaux optiques dans la deuxième plage de longueurs d'onde (λ2),
**en ce que** la fibre optique de connexion (100) comprend au moins une première portion de fibre optique fonctionnalisée (120) adaptée pour présenter à la deuxième plage de longueurs d'onde (λ2) une caractéristique optique variant avec un paramètre environnemental de la fibre optique de connexion (100),
et ce que le dispositif de mesure (10) comprend en outre un système de couplage (140) associé à la deuxième extrémité (135) de la fibre optique de connexion (100), le système de couplage (140) comprenant au moins une première et une deuxième sortie optique (141, 142) et étant adapté pour coupler optiquement le premier cœur optique (111) avec la première sortie (141) et pour coupler optiquement le deuxième cœur optique (112) avec la deuxième sortie (142).

2. Dispositif de mesure (10) selon la revendication 1, dans lequel le système de couplage (140) est en outre configuré pour, au niveau de la première sortie (141), filtrer au moins en partie les deuxièmes signaux optiques guidés dans le premier cœur optique (111).

3. Dispositif de mesure (10) selon la revendication 1 ou 2, dans lequel la deuxième extrémité de la fibre optique de connexion (100) comprend le système de couplage (140),
le système de couplage (140) comprenant un premier segment de fibre optique (136) couplés optiquement au premier cœur optique (111) et découplé optiquement du deuxième cœur optique (112), et un deuxième segment de fibre optique (137) couplé optiquement au deuxième cœur optique (112) et découplé optiquement du premier cœur optique (111),
le premier segment de fibre optique (136) comprenant la première sortie optique (141),
le deuxième segment de fibre optique (137) comprenant la deuxième sortie optique (142),
le système de couplage (140) étant préférentiellement un coupleur à double gaine.

4. Dispositif de mesure (10) selon la revendication 1 ou 2, dans lequel le système de couplage (140) est externe à la fibre optique de connexion tel qu'un séparateur apte à séparer les premiers signaux optiques et les deuxièmes signaux optiques pour les diriger respectivement vers la première et la deuxième sortie optique (141, 142).

5. Dispositif de mesure (10) selon l'une quelconque des revendications 1 à 4, dans lequel la première portion de fibre optique fonctionnalisée (120) comprend un réseau de Bragg (121) inscrit dans le second cœur optique (112).

6. Dispositif de mesure selon l'une quelconque des revendications 1 à 5, dans lequel l'équipement de mesure (30) est un système de détection de vibration, tel qu'un système de détection de vibration à membrane.

7. Ensemble de mesure (1) comprenant :
- un dispositif de mesure (10) selon l'une quelconque des revendications 1 à 6,
- un système de mesure optique (20) configuré pour interroger l'équipement de mesure (30) au moyen de premiers signaux optiques dans la première plage de longueurs d'onde (λ1) et pour mesurer la caractéristique optique de la première portion de fibre optique fonctionnalisée (120) au moyen de deuxièmes signaux optiques dans la deuxième plage de longueurs d'onde (λ2), le système de mesure optique (20) étant relié à la première et à la deuxième sortie optique (141, 142) du système de couplage (140).

8. Ensemble de mesure (1) selon la revendication 7, dans lequel le système de mesure optique (20) comprend :
- une première source optique (211) adaptée pour émettre des signaux optiques dans la première plage de longueurs d'onde (λ1),
- un premier analyseur de signaux optiques (212) adapté pour analyser les premiers signaux optiques issus de l'interrogation de l'équipement de mesure (30),
- une deuxième source optique (221) adaptée pour émettre des signaux optiques dans la deuxième plage de longueurs d'onde (λ2),
- un deuxième analyseur de signaux optiques (222) adapté pour analyser les deuxièmes signaux optiques afin de déterminer la caractéristique optique de la première portion de fibre optique fonctionnalisée (120),
- un premier élément de connexion adapté pour connecter la première source optique (211) et le premier analyseur de signaux optiques (212) à la première sortie du système de couplage,
- un deuxième élément de connexion adapté pour connecter la deuxième source optique (221) et le deuxième analyseur de signaux optiques (222) à la deuxième sortie du système de couplage.

9. Ensemble de mesure (1) selon la revendication 7, dans lequel le système de mesure optique (20) comprend :
- une première source optique (211) adaptée pour émettre des signaux optiques dans la première plage de longueurs d'onde (λ1),
- une deuxième source optique (221) adaptée pour émettre des signaux optiques dans la deuxième plage de longueurs d'onde (λ2),
- un analyseur de signaux optiques (242) adapté pour analyser les premiers signaux optiques issus de l'interrogation de l'équipement de mesure (30) et pour analyser les deuxièmes signaux optiques après interaction avec la première portion de fibre optique fonctionnalisée (120) afin de déterminer la caractéristique optique de la première portion de fibre optique fonctionnalisée (120) et le paramètre environnemental de la fibre optique de connexion (100) correspondant,
- un premier élément de connexion adapté pour connecter la première source optique (211) et l'analyseur de signaux optiques (242) à la première sortie du système de couplage,
- un deuxième élément de connexion adapté pour connecter la deuxième source optique (221) et l'analyseur de signaux optiques (242) à la deuxième sortie du système de couplage.

10. Ensemble de mesure (1) selon la revendication 7, dans lequel le système de mesure optique (20) comprend :
- une source optique (241) adaptée pour émettre des signaux optiques dans la première plage de longueurs d'onde (λ1) et dans la deuxième plage de longueurs d'onde (λ2),
- un premier analyseur de signaux optiques (212) adapté pour analyser les premiers signaux optiques issus de l'interrogation de l'équipement de mesure (30),
- une deuxième analyseur de signaux optiques (222) adapté pour analyser les deuxièmes signaux optiques après interaction avec la première portion de fibre optique fonctionnalisée (120) afin de déterminer la caractéristique optique de la première portion de fibre optique fonctionnalisée (120) et le paramètre environnemental de la fibre optique de connexion correspondant,
- un premier élément de connexion adapté pour connecter la source optique (241) et le premier analyseur de signaux optiques (212) à la première sortie du système de couplage,
- un deuxième élément de connexion adapté pour connecter la source optique (241) et le deuxième analyseur de signaux optiques (222) à la deuxième sortie du système de couplage.

11. Ensemble de mesure (1) selon la revendication 7, dans lequel le système de mesure optique (20) comprend :
- une source optique (241) adaptée pour émettre des signaux optiques dans la première plage de longueurs d'onde (λ1) et dans la deuxième plage de longueurs d'onde (λ2),
- un analyseur de signaux optiques (242) adapté pour analyser les premiers signaux optiques issus de l'interrogation de l'équipement de mesure (30) et pour analyser les deuxièmes signaux optiques après interaction avec la première portion de fibre optique fonctionnalisée (120) afin de déterminer la caractéristique optique de la première portion de fibre optique fonctionnalisée (120) et le paramètre environnemental de la fibre optique de connexion correspondant,
- un premier élément de connexion adaptée pour connecter la source optique (241) et un premier analyseur de signaux optiques (212) à la première sortie (141) du système de couplage (140),
- un deuxième élément de connexion adaptée pour connecter la source optique (241) et un deuxième analyseur de signaux optiques (222) à la deuxième sortie (142) du système de couplage (140).

12. Ensemble de mesure (1) selon l'une quelconque des revendications 7 à 11, dans lequel le dispositif de mesure (10) est un dispositif de mesure selon la revendication 5 prise seule ou en combinaison avec la revendication 6, et dans lequel le système de mesure optique (20) est configuré pour mesurer une variation de la fréquence de résonnance du réseau de Bragg (121) à partir de signaux optiques dans la deuxième plage de longueurs d'onde (A2).

13. Procédé de mesure à partir d'un dispositif de mesure selon l'une quelconque des revendications 1 à 6, comprenant les étapes suivantes :
- émission de premiers signaux optiques dans la première plage de longueurs d'onde (λ1), lesdits premiers signaux optiques étant transmis à la première sortie optique (141) du système de couplage (140) et le premier cœur optique (111) afin d'interroger l'équipement de mesure (30),
- analyse des premiers signaux optiques récupérés à partir de la première sortie optique (141) du système de couplage (140) après interaction avec l'équipement de mesure (30),
- émission de deuxièmes signaux optiques dans la deuxième plage de longueurs d'onde (λ2), les deuxièmes signaux optiques étant transmis à la deuxième sortie optique (142) du système de couplage (140) et le deuxième cœur optique (112) afin d'interagir avec la première portion de fibre optique fonctionnalisée (120),
- analyse des deuxièmes signaux optiques récupérés à partir de la deuxième sortie optique (142) du système de couplage (140) après interaction avec la première portion de fibre optique fonctionnalisée (120) ceci afin déterminer la caractéristique optique de la première portion de fibre optique fonctionnalisée (120) et le paramètre environnemental de la fibre optique de connexion (100) correspondant.

14. Appareil comprenant un ensemble de mesure (1) selon l'une quelconque des revendications 7 à 12.

15. Appareil selon la revendication 14 dans lequel ledit appareil est une turbomachine.

## Patentansprüche

1. Messvorrichtung (10), umfassend,
- eine Messausrüstung (30), die so eingerichtet ist, dass sie von einem Messsystem (20) mittels erster optischer Signale in einem ersten Wellenlängenbereich (λ1) optisch abgefragt werden kann,
- eine optische Verbindungsfaser (100), umfassend ein erstes Ende (131), das mit der Messausrüstung (30) verbunden ist, und ein zweites Ende (135), das mit dem Messsystem (20) verbunden werden soll, wobei die optische Verbindungsfaser (100) mindestens einen ersten Multimode-Optikkern (111) in dem ersten Wellenlängenbereich (λ1) umfasst, um die ersten optischen Signale zu übertragen,
wobei die Messvorrichtung (10) **dadurch gekennzeichnet ist, dass** die optische Verbindungsfaser (100) ferner einen zweiten monomodalen optischen Kern (112) in einem zweiten Wellenlängenbereich (λ2) umfasst, um zweite optische Signale in dem zweiten Wellenlängenbereich (λ2) zu übertragen,
dass die optische Verbindungsfaser (100) mindestens einen ersten funktionalisierten Glasfaserabschnitt (120) umfasst, der so ausgelegt ist, dass er in dem zweiten Wellenlängenbereich (λ2) ein optisches Merkmal aufweist, das mit einem Umgebungsparameter der optischen Verbindungsfaser (100) variiert,
und dass die Messvorrichtung (10) ferner ein Kopplungssystem (140) umfasst, das mit dem zweiten Ende (135) der optischen Verbindungsfaser (100) verbunden ist, wobei das Kopplungssystem (140) mindestens einen ersten und einen zweiten optischen Ausgang (141, 142) umfasst und dazu ausgelegt ist, den ersten optischen Kern (111) mit dem ersten Ausgang (141) optisch zu koppeln und den zweiten optischen Kern (112) mit dem zweiten Ausgang (142) optisch zu koppeln.

2. Messvorrichtung (10) nach Anspruch 1, wobei das Kopplungssystem (140) ferner so eingerichtet ist, dass es an dem ersten Ausgang (141) mindestenss teilweise die in dem ersten optischen Kern (111) geführten zweiten optischen Signale filtert.

3. Messvorrichtung (10) nach Anspruch 1 oder 2, wobei das zweite Ende der optischen Verbindungsfaser (100) das Kopplungssystem (140) umfasst,
wobei das Kopplungssystem (140) ein erstes Glasfasersegment (136), das optisch mit dem ersten optischen Kern (111) gekoppelt und optisch von dem zweiten optischen Kern (112) entkoppelt ist, und ein zweites Glasfasersegment (137) umfasst, das optisch mit dem zweiten optischen Kern (112) gekoppelt und optisch von dem ersten optischen Kern (111) entkoppelt ist, wobei das erste Glasfasersegment (136) den ersten optischen Ausgang (141) umfasst,
das zweite Glasfasersegment (137), das den zweiten optischen Ausgang (142) umfasst,
wobei das Kopplungssystem (140) vorzugsweise eine Doppelmantelkopplung ist.

4. Messvorrichtung (10) nach Anspruch 1 oder 2, wobei das Kopplungssystem (140) extern zu der optischen Verbindungsfaser ist, wie ein Trenner, der geeignet ist, die ersten optischen Signale und die zweiten optischen Signale zu trennen, um sie jeweils zu dem ersten und zweiten optischen Ausgang (141, 142) zu leiten.

5. Messvorrichtung (10) nach einem der Ansprüche 1 bis 4, wobei der erste funktionalisierte Glasfaserabschnitt (120) ein in den zweiten optischen Kern (112) eingetragenes Bragg-Netzwerk (121) umfasst.

6. Messvorrichtung nach einem der Ansprüche 1 bis 5, wobei die Messausrüstung (30) ein Schwingungserkennungssystem, wie ein Membranschwingungserkennungssystem, ist.

7. Messanordnung (1), umfassend:
- eine Messvorrichtung (10) nach einem der Ansprüche 1 bis 6,
- ein optisches Messsystem (20), das so eingerichtet ist, dass es die Messausrüstung (30) mittels erster optischer Signale in dem ersten Wellenlängenbereich (λ1) abfragt und das optische Merkmal des ersten funktionalisierten Glasfaserabschnitts (120) mittels zweiter optischer Signale in dem zweiten Wellenlängenbereich (λ2) misst, wobei das optische Messsystem (20) mit dem ersten und zweiten optischen Ausgang (141, 142) des Kopplungssystems (140) verbunden ist.

8. Messanordnung (1) nach Anspruch 7, wobei das optische Messsystem (20) Folgendes umfasst:
- eine erste optische Quelle (211), die zu dem Senden optischer Signale in dem ersten Wellenlängenbereich (λ1) ausgelegt ist,
- einen ersten optischen Signalanalysator (212), der dazu ausgelegt ist, die ersten optischen Signale aus der Abfrage der Messausrüstung (30) zu analysieren,
- eine zweite optische Quelle (221), die zu dem Senden optischer Signale in dem zweiten Wellenlängenbereich (λ2) ausgelegt ist,
- einen zweiten optischen Signalanalysator (222), der dazu ausgelegt ist, die zweiten optischen Signale zu analysieren, um das optische Merkmal des ersten funktionalisierten Glasfaserabschnitts (120) zu bestimmen,
- ein erstes Verbindungselement, das dazu ausgelegt ist, die erste optische Quelle (211) und den ersten optischen Signalanalysator (212) mit dem ersten Ausgang des Kopplungssystems zu verbinden,
- ein zweites Verbindungselement, das dazu ausgelegt ist, die zweite optische Quelle (221) und den zweiten optischen Signalanalysator (222) mit dem zweiten Ausgang des Kopplungssystems zu verbinden.

9. Messanordnung (1) nach Anspruch 7, wobei das optische Messsystem (20) Folgendes umfasst:
- eine erste optische Quelle (211), die zu dem Senden optischer Signale in dem ersten Wellenlängenbereich (λ1) ausgelegt ist,
- eine zweite optische Quelle (221), die zu dem Senden optischer Signale in dem zweiten Wellenlängenbereich (λ2) ausgelegt ist,
- einen optischen Signalanalysator (242), der dazu ausgelegt ist, die ersten optischen Signale aus der Abfrage der Messausrüstung (30) zu analysieren und die zweiten optischen Signale nach der Interaktion mit dem ersten funktionalisierten Glasfaserabschnitt (120) zu analysieren, um das optische Merkmal des ersten funktionalisierten Glasfaserabschnitts (120) und den entsprechenden Umgebungsparameter der optischen Verbindungsfaser (100) zu bestimmen,
- ein erstes Verbindungselement, das dazu ausgelegt ist, die erste optische Quelle (211) und den optischen Signalanalysator (242) mit dem ersten Ausgang des Kopplungssystems zu verbinden,
- ein zweites Verbindungselement, das dazu ausgelegt ist, die zweite optische Quelle (221) und den optischen Signalanalysator (242) mit dem zweiten Ausgang des Kopplungssystems zu verbinden.

10. Messanordnung (1) nach Anspruch 7, wobei das optische Messsystem (20) Folgendes umfasst:
- eine optische Quelle (241), die zu dem Senden optischer Signale in dem ersten Wellenlängenbereich (λ1) und in dem zweiten Wellenlängenbereich (λ2) ausgelegt ist,
- einen ersten optischen Signalanalysator (212), der dazu ausgelegt ist, die ersten optischen Signale aus der Abfrage der Messausrüstung (30) zu analysieren,
- einen zweiten optischen Signalanalysator (222), der dazu ausgelegt ist, die zweiten optischen Signale nach der Interaktion mit dem ersten funktionalisierten Glasfaserabschnitt (120) zu analysieren, um das optische Merkmal des ersten funktionalisierten Glasfaserabschnitts (120) und den entsprechenden Umgebungsparameter der optischen Verbindungsfaser zu bestimmen,
- ein erstes Verbindungselement, das dazu ausgelegt ist, die optische Quelle (241) und den ersten optischen Signalanalysator (212) mit dem ersten Ausgang des Kopplungssystems zu verbinden,
- ein zweites Verbindungselement, das dazu ausgelegt ist, die optische Quelle (241) und den zweiten optischen Signalanalysator (222) mit dem zweiten Ausgang des Kopplungssystems zu verbinden.

11. Messanordnung (1) nach Anspruch 7, wobei das optische Messsystem (20) Folgendes umfasst:
- eine optische Quelle (241), die zu dem Senden optischer Signale in dem ersten Wellenlängenbereich (λ1) und in dem zweiten Wellenlängenbereich (λ2) ausgelegt ist,
- einen optischen Signalanalysator (242), der dazu ausgelegt ist, die ersten optischen Signale aus der Abfrage der Messausrüstung (30) zu analysieren und die zweiten optischen Signale nach der Interaktion mit dem ersten funktionalisierten Glasfaserabschnitt (120) zu analysieren, um das optische Merkmal des ersten funktionalisierten Glasfaserabschnitts (120) und den entsprechenden Umgebungsparameter der optischen Verbindungsfaser zu bestimmen,
- ein erstes Verbindungselement, das dazu ausgelegt ist, die optische Quelle (241) und einen ersten optischen Signalanalysator (212) mit dem ersten Ausgang (141) des Kopplungssystems (140) zu verbinden,
- ein zweites Verbindungselement, das dazu ausgelegt ist, die optische Quelle (241) und einen zweiten optischen Signalanalysator (222) mit dem zweiten Ausgang (142) des Kopplungssystems (140) zu verbinden.

12. Messanordnung (1) nach einem der Ansprüche 7 bis 11, wobei die Messvorrichtung (10) eine Messvorrichtung nach Anspruch 5 allein oder in Kombination mit Anspruch 6 ist und wobei das optische Messsystem (20) so eingerichtet ist, dass es eine Änderung der Resonanzfrequenz des Bragg-Netzwerks (121) aus optischen Signalen in dem zweiten Wellenlängenbereich (λ2) misst.

13. Messverfahren unter Verwendung einer Messvorrichtung nach einem der Ansprüche 1 bis 6, mit den folgenden Schritten:
- Senden erster optischer Signale im ersten Wellenlängenbereich (λ1), wobei die ersten optischen Signale an den ersten optischen Ausgang (141) des Kopplungssystems (140) und den ersten optischen Kern (111) übertragen werden, um die Messausrüstung (30) abzufragen,
- Analysieren der ersten optischen Signale, die von dem ersten optischen Ausgang (141) des Kopplungssystems (140) nach der Interaktion mit der Messausrüstung (30) zurückgewonnen wurden,
- Senden zweiter optischer Signale in dem zweiten Wellenlängenbereich (λ2), wobei die zweiten optischen Signale an den zweiten optischen Ausgang (142) des Kopplungssystems (140) und den zweiten optischen Kern (112) übertragen werden, um mit dem ersten funktionalisierten Glasfaserabschnitt (120) zu interagieren,
- Analysieren der zweiten optischen Signale, die von dem zweiten optischen Ausgang (142) des Kopplungssystems (140) nach der Interaktion mit dem ersten funktionalisierten Glasfaserabschnitt (120) zurückgewonnen wurden, um das optische Merkmal des ersten funktionalisierten Glasfaserabschnitts (120) und den entsprechenden Umgebungsparameter der optischen Verbindungsfaser (100) zu bestimmen.

14. Einrichtung, das eine Messanordnung (1) nach einem der Ansprüche 7 bis 12 umfasst.

15. Einrichtung nach Anspruch 14, wobei die Einrichtung eine Turbomaschine ist.

## Claims

1. A measuring device (10) comprising,
- a measuring equipment (30) configured to be interrogated optically by a measurement system (20) by means of first optical signals in a first wavelength range (λ1),
- a connecting optical fibre (100) comprising a first end (131) connected to the measuring equipment (30) and a second end (135) intended to be connected to the measurement system (20), the connecting optical fibre (100) comprising at least a first multi-mode optical core (111) in the first wavelength range (λ1) for transmitting the first optical signals,
the measuring device (10) **being characterised in that** the connecting optical fibre (100) further comprises a second single-mode optical core (112) in a second wavelength range (λ2) for transmitting second optical signals in the second wavelength range (λ2),
**in that** the connecting optical fibre (100) comprises at least a first functionalised optical fibre portion (120) adapted to have at the second wavelength range (λ2) an optical feature varying with an environmental parameter of the connecting optical fibre (100),
and **in that** the measuring device (10) further comprises a coupling system (140) associated with the second end (135) of the connecting optical fibre (100), the coupling system (140) comprising at least a first and a second optical output (141, 142) and being adapted to optically couple the first optical core (111) with the first output (141) and to optically couple the second optical core (112) with the second output (142).

2. The measuring device (10) according to claim 1, wherein the coupling system (140) is further configured, at the first output (141), to at least partially filter the second optical signals guided through the first optical core (111).

3. The measuring device (10) according to claim 1 or 2, wherein the second end of the connecting optical fibre (100) comprises the coupling system (140),
the coupling system (140) comprising a first optical fibre segment (136) optically coupled to the first optical core (111) and optically decoupled from the second optical core (112), and a second optical fibre segment (137) optically coupled to the second optical core (112) and optically decoupled from the first optical core (111),
the first optical fibre segment (136) comprising the first optical output (141),
the second optical fibre segment (137) comprising the second optical output (142),
the coupling system (140) preferably being a double-clad coupler.

4. The measuring device (10) according to claim 1 or 2, wherein the coupling system (140) is external to the connecting optical fibre, such as a splitter capable of splitting the first optical signals and the second optical signals to direct them respectively to the first and the second optical output (141, 142).

5. The measuring device (10) according to any one of claims 1 to 4, wherein the first functionalised optical fibre portion (120) comprises a Bragg grating (121) inscribed in the second optical core (112).

6. The measuring device according to any one of claims 1 to 5, wherein the measuring equipment (30) is a vibration detection system, such as a membrane vibration detection system.

7. A measuring assembly (1) comprising:
- a measuring device (10) according to any one of claims 1 to 6,
- an optical measurement system (20) configured to interrogate the measuring equipment (30) by means of first optical signals in the first wavelength range (λ1) and to measure the optical feature of the first optical fibre portion (120) functionalised by means of second optical signals in the second wavelength range (λ2), the optical measurement system (20) being connected to the first and to the second optical output (141, 142) of the coupling system (140).

8. The measurement assembly (1) according to claim 7, wherein the optical measurement system (20) comprises:
- a first optical source (211) adapted to emit optical signals in the first wavelength range (λ1),
- a first optical signal analyser (212) adapted to analyse the first optical signals from the interrogation of the measuring equipment (30),
- a second optical source (221) adapted to emit optical signals in the second wavelength range (λ2),
- a second optical signal analyser (222) adapted to analyse the second optical signals in order to determine the optical feature of the first functionalised optical fibre portion (120),
- a first connection element adapted to connect the first optical source (211) and the first optical signal analyser (212) to the first output of the coupling system,
- a second connection element adapted to connect the second optical source (221) and the second optical signal analyser (222) to the second output of the coupling system.

9. The measurement assembly (1) according to claim 7, wherein the optical measurement system (20) comprises:
- a first optical source (211) adapted to emit optical signals in the first wavelength range (λ1),
- a second optical source (221) adapted to emit optical signals in the second wavelength range (λ2),
- an optical signal analyser (242) adapted to analyse the first optical signals resulting from the interrogation of the measuring equipment (30) and to analyse the second optical signals after interaction with the first functionalised optical fibre portion (120) in order to determine the optical feature of the first functionalised optical fibre portion (120) and the corresponding environmental parameter of the connecting optical fibre (100),
- a first connection element adapted to connect the first optical source (211) and the optical signal analyser (242) to the first output of the coupling system,
- a second connection element adapted to connect the second optical source (221) and the optical signal analyser (242) to the second output of the coupling system.

10. The measurement assembly (1) according to claim 7, wherein the optical measurement system (20) comprises:
- an optical source (241) adapted to emit optical signals in the first wavelength range (λ1) and in the second wavelength range (λ2),
- a first optical signal analyser (212) adapted to analyse the first optical signals from the interrogation of the measuring equipment (30),
- a second optical signal analyser (222) adapted to analyse the second optical signals after interaction with the first functionalised optical fibre portion (120) in order to determine the optical feature of the first functionalised optical fibre portion (120) and the corresponding environmental parameter of the connecting optical fibre,
- a first connection element adapted to connect the optical source (241) and the first optical signal analyser (212) to the first output of the coupling system,
- a second connection element adapted to connect the optical source (241) and the second optical signal analyser (222) to the second output of the coupling system.

11. The measurement assembly (1) according to claim 7, wherein the optical measurement system (20) comprises:
- an optical source (241) adapted to emit optical signals in the first wavelength range (λ1) and in the second wavelength range (λ2),
- an optical signal analyser (242) adapted to analyse the first optical signals resulting from the interrogation of the measuring equipment (30) and to analyse the second optical signals after interaction with the first functionalised optical fibre portion (120) in order to determine the optical feature of the first functionalised optical fibre portion (120) and the environmental parameter of the corresponding connecting optical fibre,
- a first connection element adapted to connect the optical source (241) and the first optical signal analyser (212) to the first output (141) of the coupling system (140),
- a second connection element adapted to connect the optical source (241) and the second optical signal analyser (222) to the second output (142) of the coupling system (140).

12. The measurement assembly (1) according to any one of claims 7 to 11, wherein the measuring device (10) is a measuring device according to claim 5 taken alone or combined with claim 6, and wherein the optical measurement system (20) is configured to measure a change in the resonant frequency of the Bragg grating (121) from optical signals in the second wavelength range (λ2).

13. A measurement method from a measuring device according to any one of claims 1 to 6, comprising the following steps:
- emitting first optical signals in the first wavelength range (λ1), said first optical signals being transmitted to the first optical output (141) of the coupling system (140) and the first optical core (111) in order to interrogate the measuring equipment (30),
- analysing the first optical signals recovered from the first optical output (141) of the coupling system (140) after interaction with the measuring equipment (30),
- emitting second optical signals in the second wavelength range (λ2), the second optical signals being transmitted to the second optical output (142) of the coupling system (140) and the second optical core (112) in order to interact with the first functionalised optical fibre portion (120),
- analysing the second optical signals recovered from the second optical output (142) of the coupling system (140) after interaction with the first functionalised optical fibre portion (120) in order to determine the optical feature of the first functionalised optical fibre portion (120) and the environmental parameter of the connecting optical fibre (100).

14. An apparatus comprising a measurement assembly (1) according to any one of claims 7 to 12.

15. The apparatus according to claim 14 wherein said apparatus is a turbomachine.
